# EUROPÄISCHE PATENTSCHRIFT

(11) **EP 3 410 006 B1**
(45) Veröffentlichungstag und Bekanntmachung des Hinweises auf die Patenterteilung: **18.12.2024**
(21) Anmeldenummer: 18175191.8
(22) Anmeldetag: 30.05.2018
(51) Int. Cl.: F21V 5/04, F21V 7/00, F21V 8/00

(54) **MODULARER LICHTLEITER**
MODULAR LIGHT GUIDE
GUIDE D'ONDES OPTIQUES MODULAIRE

(30) Priorität: 31.05.2017 DE 102017111912
(43) Veröffentlichungstag der Anmeldung: 05.12.2018
(73) Patentinhaber: Trilux GmbH & Co. KG, 59759 Arnsberg (DE)
(72) Erfinder: Lewers, Christoph, 59757 Arnsberg (DE)
(74) Vertreter: Lippert Stachow Patentanwälte Rechtsanwälte

(56) Entgegenhaltungen:
- EP-A1- 0 945 673
- DE-A1- 102015 222 495
- DE-U1- 202013 005 301
- US-A1- 2011 164 434
- US-A1- 2014 063 847
- US-A1- 2014 362 588
- US-B1- 7 160 010

## Beschreibung

Die Erfindung betrifft ein Optikelement gemäß dem Oberbegriff von Anspruch 1 sowie eine Optikanordnung umfassend mehrere erfindungsgemäße Optikelemente.

Im Stand der Technik sind bereits unterschiedlichste Varianten von Optikelementen bekannt. Gattungsgemäße Optikelemente werden beispielsweise zur Lenkungen von Licht in einer Leuchte eingesetzt. Allgemein werden gattungsgemäße Optikelemente zum Lenken von Licht eingesetzt. Gattungsgemäße Optikelemente weisen hierzu einen Linsenkörper mit einer Oberfläche auf, die einen Lichteinkoppelabschnitt und einen Lichtauskoppelabschnitt des Optikelements ausbildet. Zur Lenkung von Licht, das von einer Lichtquelle der Leuchte, insbesondere einer mehrere LEDs umfassenden Lichtquelle der Leuchte, ausgesandt wird, wird ein gattungsgemäßes Optikelement gezielt so zu der Lichtquelle ausgerichtet, dass von der Lichtquelle ausgesandtes Licht auf den Lichteinkoppelabschnitt des Linsenkörpers auftrifft und dort in den Linsenkörper eingekoppelt wird, sodann in dem Linsenkörper geführt wird und schließlich über den Lichtauskoppelabschnitt aus dem Linsenkörper austritt. Ein gattungsgemäßes Optikelement stellt somit eine Lichtverteilung bereit, so dass einem Optikelement eine Lichtverteilungskurve zugeordnet ist, durch die festgelegt ist, in welchen Raumwinkeln eine Leuchte Licht mit welchem Anteil der Lichtintensität abstrahlt, das von der Lichtquelle der Leuchte ausgesandt wurde und durch das zur Lichtquelle ausgerichtete Optikelement der Leuchte gelenkt wurde. Im Stand der Technik sind unterschiedlichste Möglichkeiten zur Realisierung entsprechender Optikelemente mit entsprechenden Linsenkörpern bekannt. Die Linsenkörper sind gezielt aus einem Material mit einem Brechungsindex vorgesehen, der größer als der Brechungsindex der Umgebung ist, beispielsweise größer als der Brechungsindex von Luft. Über die Form der Grenzflächen des Linsenkörpers zwischen seinem Lichteinkoppelabschnitt und seinem Lichtauskoppelabschnitt in Kombination mit dem Material, aus dem der Linsenkörper gefertigt ist, kann gezielt Einfluss auf die Führung von Licht, das über den Lichteinkoppelabschnitt in den Linsenkörper eingekoppelt wurde, bis zu dem Lichtauskoppelabschnitt genommen werden. Beispielsweise sind TIR-Optikelemente bekannt, bei denen ein Lichtstrahl, der über den Lichteinkoppelabschnitt in den Linsenkörper eingekoppelt wurde, an den Grenzflächen des Linsenkörpers innerhalb des Linsenkörpers vollständig reflektiert wird, bis er über den Lichtauskoppelabschnitt wieder aus dem Linsenkörper austritt. In anderen Ausführungsformen findet nur eine teilweise Reflektion eines eingekoppelten Lichtstrahls an den Grenzflächen des Linsenkörpers innerhalb des Linsenkörpers statt, so dass ein Teil des Lichts bereits zwischen dem Lichteinkoppelabschnitt und dem Lichtauskoppelabschnitt aus dem Linsenkörper austritt, bevorzugt weniger als 50 % der Intensität des eingekoppelten Lichts, so dass aus dem Lichtauskoppelabschnitt bevorzugt stets mehr als 50 %, besonders bevorzugt mehr als 80 % des über den Lichteinkoppelabschnitt eingekoppelten Lichts, bezogen auf die gesamte eingekoppelte Lichtintensität, austritt. Über entsprechende Ausgestaltung des Linsenkörpers kann besonders bevorzugt gewährleistet sein, dass ein Lichtstrahl, der mit einer bestimmten Einfallsrichtung auf den Lichteinkoppelabschnitt auftritt, mit einer vordefinierten Ausfallsrichtung aus dem Lichtauskoppelabschnitt austritt. Besonders bevorzugt ist einem Optikelement ein Lichtquellenpunkt zugeordnet. Bei Anordnung einer punktförmigen Lichtquelle an dem Lichtquellenpunkt wird ein vorbestimmter Anteil des von der Lichtquelle ausgesandten Lichts über den Lichteinkoppelabschnitt in den Linsenkörper eingekoppelt und in einem vorgegebenen Abstrahlwinkel aus dem Lichtauskoppelabschnitt ausgekoppelt.

Aufgrund ihres erläuterten Zwecks werden gattungsgemäße Optikelemente mit vordefinierten geometrischen Formen hergestellt. Beispielsweise sind prismenförmige Linsenkörper, Freiform-Linsenkörper, zylindrische Linsenkörper oder andere Formen von Linsenkörpern bekannt. Wie erläutert wird die Form des Linsenkörpers und damit die Form von Lichteinkoppelabschnitt und Lichtauskoppelabschnitt sowie die Form der Grenzflächen zwischen diesen beiden Abschnitten für den gewünschten Zweck gezielt angepasst und somit auch die Form des Linsenkörpers gezielt angepasst, damit die von dem Optikelement bereitgestellte Lichtverteilung gezielt vorbestimmt ist. Dies macht es erforderlich, dass Optikelemente häufig geometrisch komplexe Formen aufweisen, wobei insbesondere solche Optikelemente an verschiedenen Stellen sehr unterschiedliche Materialdicken aufweisen. Dies macht die Herstellung von solchen Optikelementen oftmals problematisch, insbesondere dann, wenn solche Optikelemente mit komplexen Formen als einstückiges Bauteil hergestellt werden, was für die Lichtführung oftmals besonders vorteilhaft ist. Durch die komplexen Formen und unterschiedlichen Materialdicken ist es schwierig, Optikelemente mit einer solchen hinreichenden Präzision zu fertigen, dass mit ihnen eine gewünschte Lenkung eines Lichts stets innerhalb eines geringen Toleranzbereichs gewährleistet ist. Dies ist jedoch für eine Vielzahl an Anwendungsfällen dringend erforderlich, beispielsweise bei der Verwendung von Optikelementen in einer Leuchte, um die Abstrahlcharakteristik der Leuchte vorzugeben. Gerade bei der Herstellung über Spritzguss-Verfahren, das grundsätzlich für die Serienproduktion besonders vorteilhaft ist, haben sich diese Probleme als besonders gravierend herausgestellt, weil gerade dann bei dem Herstellen eines Bauteils mit sehr unterschiedlichen Materialstärken das Einhalten geringer Toleranzen bei der geometrischen Form solcher Bauteile schwierig ist, da es wegen der unterschiedlichen Materialstärken leicht zu einem Materialeinfall während der Herstellung kommen kann. In EP 0 945 673 A1 ist beispielsweise ein Optikelement offenbart, bei dem der Lichteinkoppelabschnitt an einem vertikalen Ende angeordnet ist, wobei zur Lichtlenkung in dem Material des Optikelements Löcher vorgesehen sind. In DE 20 2013 005 301 U1 ist ein drehsymmetrisches Optikelement offenbart, dessen vertikale Erstreckung vom Zentrum horizontal nach außen hin abnimmt, wobei in die dem Lichtaustrittsabschnitt gegenüberliegende Seite des Optikelements eine Höhennivellierung eingearbeitet ist unter Ausbildung von mit Bezug auf eine Drehrichtung um das Zentrum benachbarten, nebeneinander angeordneten, höhenversetzten Abschnitten des Optikelements. In US 2014/063847 A1 und in dem Dokument US 2011/164434 A1 ist eine Optikelementanordnung mit zwei Optikelementen offenbart, die jeweils Lichtleitabschnitte aufweisen, wobei die Optikelemente so ineinander gesetzt sind, dass ihre Lichtleitabschnitte nebeneinander verlaufen. In US 2014/0362588 A1 ist ein drehsymmetrisches Optikelement offenbart, das mehrere Lichtleitabschnitte aufweist, die sich von einem zentralen Lichtkoppelabschnitt sternförmig weg erstrecken, wobei zwei benachbarte Lichtleitabschnitt jeweils eine andere Oberflächenstruktur aufweisen. In US 7 160 010 B1 ist ein Optikelement mit Lichtleitabschnitten offenbart, die sich jeweils von einem mittleren Körperabschnitt des Optikelements weg erstrecken und voneinander beabstandet sind und jeweils einen Teil des Lichtauskoppelabschnitts des Optikelements ausbilden, aus dem bei bestimmungsgemäßer Verwendung des Optikelements Licht ausgekoppelt wird. In DE 10 2015 222 495 A1 ist ebenfalls ein Optikelement offenbart, das sich von einem mittleren Körperabschnitt des Optikelements weg erstreckt und davon beabstandet ist und jeweils einen Teil des Lichtauskoppelabschnitts des Optikelements ausbildet, aus dem bei bestimmungsgemäßer Verwendung des Optikelements Licht mit Lichtleitabschnitten offenbart, die sich jeweils von einem mittleren Körperabschnitt des Optikelements weg erstrecken und voneinander beabstandet sind und jeweils einen Teil des Lichtauskoppelabschnitts des Optikelements ausbilden, aus dem bei bestimmungsgemäßer Verwendung des Optikelements Licht ausgekoppelt wird.

Der Erfindung liegt die Aufgabe zugrunde, ein Optikelement bereitzustellen, mit dem zumindest einigen der oben beschriebenen Probleme zumindest teilweise begegnet werden kann. Insbesondere liegt der Erfindung die Aufgabe zugrunde, eine Anordnung von Optikelementen bereitzustellen, die einfach und präzise herstellbar ist und mit der sich eine komplexe Lichtlenkung zuverlässig realisieren lässt.

Als eine Lösung zumindest einer der angegebenen Aufgaben schlägt die Erfindung ein Optikelement mit den Merkmalen von Anspruch 1 vor. Wie zu gattungsgemäßen Optikelementen erläutert weist auch das erfindungsgemäße Optikelement einen Linsenkörper mit einer Oberfläche auf, die einen Lichteinkoppelabschnitt und einen Lichtauskoppelabschnitt des Optikelements ausbildet. Der Linsenkörper ist dazu ausgebildet, einen Lichtstrahl, der auf seinen Lichteinkoppelabschnitt mit einer Einfallrichtung auftrifft, einzukoppeln und mit einer Ausfallrichtung aus seinem Lichtauskoppelabschnitt auszukoppeln. Der Linsenkörper ist somit wie erläutert zum Führen des Lichtstrahls zwischen dem Lichteinkoppelabschnitt und dem Lichtauskoppelabschnitt ausgebildet. Beispielsweise kann der Linsenkörper so ausgebildet sein, dass der Lichtstrahl innerhalb des Linsenkörpers im Wesentlichen totalreflektiert wird, so dass die Intensität des Lichtstrahls, mit der er aus dem Lichtauskoppelabschnitt austritt, mindestens 90 % der Lichtintensität des Lichtstrahls beträgt, die an dem Lichteinkoppelabschnitt in den Linsenkörper eingekoppelt wird. In anderen Ausführungsformen wird der Lichtstrahl zwischen Lichteinkoppelabschnitt und Lichtauskoppelabschnitt nur teilweise an Grenzflächen des Linsenkörpers reflektiert, so dass der Lichtstrahl aus dem Lichtauskoppelabschnitt mit einer deutlich geringeren Intensität austritt, beispielsweise mit mindestens 50 %, insbesondere mindestens 70 % der Intensität des Lichtstrahls, die in den Linsenkörper an dem Lichteinkoppelabschnitt eingekoppelt wurde. Das erfindungsgemäße Optikelement kann Ausgestaltungen und Vorteile aufweisen, die im Zusammenhang mit gattungsgemäßen Optikelementen erläutert wurden. Besonders bevorzugt weist der Lichtauskoppelabschnitt einen gemittelten flächigen Verlauf auf, der senkrecht zu einer Vertikalen verläuft. Insbesondere ist der Lichtauskoppelabschnitt über die flächige Erstreckung der Oberfläche des Linsenkörpers definiert, über die der Linsenkörper hinweg Licht abstrahlt, wenn eine punktförmige Lichtquelle an dem Lichtquellenpunkt des Optikelements angeordnet ist und Licht auf das Optikelement strahlt. In einigen erfindungsgemäßen Ausführungsformen weist der Lichteinkoppelabschnitt mehrere Teilabschnitte auf, von denen jeder einem oder einer festgelegten Gruppe an Lichtleitabschnitten zugeordnet ist, wobei der Lichtauskoppelabschnitt über die flächige Erstreckung der Oberfläche des Linsenkörpers definiert ist, über die der Linsenkörper hinweg Licht abstrahlt, wenn an jedem Teilabschnitt eine punktförmige Lichtquelle an einem dem jeweiligen Teilabschnitt zugeordneten Lichtquellenpunkt angeordnet ist und Licht auf das Optikelement strahlt. Allgemein beziehen sich nachfolgende Ausführungen betreffend die Führung von Licht in dem Optikelement bzw. betreffend das Auskoppeln von Licht aus dem Optikelement bevorzugt auf die Annahme, dass das Licht zuvor von einer bzw. mehreren Punktlichtquellen, die an dem bzw. den Lichtquellenpunkten des Optikelements angeordnet ist, abgestrahlt wurde.

Erfindungsgemäß weist der Linsenkörper mehrere Lichtleitabschnitte auf, die miteinander lichtführend verbunden sind und die über eine horizontale Schnittebene verteilt angeordnet sind. Jeder Lichtleitabschnitt weist in der horizontalen Schnittebene einen durchgehenden Verlauf zwischen seinen beiden Längsenden auf und ist lateral zu seinem Verlauf durch zwei gegenüberliegende laterale Erstreckungsenden begrenzt, wobei jeder Lichtleitabschnitt von seinen in der horizontalen Schnittebene lateral benachbarten Lichtleitabschnitten lateral beabstandet ist. Besonders bevorzugt ist zumindest eine Mehrzahl der Lichtleitabschnitte, insbesondere jeder Lichtleitabschnitt, zum Führen des Lichtstrahls entlang seines durchgehenden Verlaufs zwischen seinen lateralen Erstreckungsenden ausgebildet, so dass der Lichtleitabschnitt einen Lichtstrahl, der in ihn eintritt, über seinen durchgehenden Verlauf hinweg zwischen seinen lateralen Erstreckungsenden führt, wobei insbesondere weniger als 10 %, insbesondere weniger als 5 % der Lichtintensität des Lichtstrahls über die lateralen Erstreckungsenden aus dem Lichtleitabschnitt austritt. Die Lichtleitabschnitte stellen voneinander beabstandete Abschnitte des Linsenkörpers dar. Jeder Lichtleitabschnitt verläuft in der horizontalen Schnittebene durchgehend von einem ersten Längsende zu einem zweiten Längsende und ist über seinen durchgehenden Verlauf hin weg von seinen lateral benachbarten Lichtleichtabschnitten lateral beabstandet, so dass jeweils zwischen zwei lateral benachbarten Lichtleitabschnitten ein Freiraum angeordnet ist. Zumindest einige, insbesondere eine Mehrheit, insbesondere sämtliche Lichtleitabschnitte können einen geradlinigen durchgehenden Verlauf oder einen gekrümmten durchgehenden Verlauf aufweisen. Der durchgehende Verlauf eines Lichtleitabschnitts ist durch den Verlauf seines lateralen Mittelpunkts von dem ersten Längsende zu dem zweiten Längsende festgelegt. Die laterale Richtung steht somit stets senkrecht auf der Verlaufsrichtung, wobei bei einem gekrümmten durchgehenden Verlauf die Verlaufsrichtung ebenfalls gekrümmt ist und somit die laterale Richtung für jeden Ort entlang des durchgehenden Verlaufs separat zu bestimmen ist. Ein Längsende eines Lichtleitabschnitts kann beispielsweise durch den Übergang des Lichtleitabschnitts in einen anderen Körperabschnitt des Linsenkörpers vorgegeben sein. Alternativ kann ein Längsende beispielsweise durch ein Erstreckungsende des Linsenkörpers vorgegeben sein. Über seinen gesamten durchgehenden Verlauf hin weg ist ein jeder Lichtleitabschnitt stets durch zwei gegenüberliegende laterale Erstreckungsenden begrenzt, die an einen Freiraum angrenzen, der beispielsweise mit Luft oder mit einem von dem Linsenkörpermaterial unterschiedlichen Material gefüllt sein kann, jedenfalls jedoch nicht mit demselben Material gefüllt ist, aus dem der Lichtleitabschnitt besteht, insbesondere aus einem Material aus einem unterschiedlichen Brechungsindex im Vergleich zu dem Material des Lichtleitabschnitts ausgebildet ist. Jeder Lichtleitabschnitt erstreckt sich über einen vertikalen Abschnitt des Linsenkörpers hinweg, ist somit über diesen vertikalen Abschnitt des Linsenkörpers hinweg von seinen lateral benachbarten Lichtleitabschnitten lateral beabstandet. Dieser vertikale Abschnitt stellt bevorzugt einen wesentlichen Anteil der maximalen gesamten vertikalen Erstreckungslänge des Linsenkörpers innerhalb des horizontalen Bereichs dar, über den sich der jeweilige Lichtleitabschnitt erstreckt, erfindungsgemäß mindestens 30 %, bevorzugt mindestens 60 % dieser Erstreckungslänge. Besonders bevorzugt ist der Linsenkörper als einstückiger Körper ausgebildet, insbesondere als ein über Spritzguss-Verfahren hergestellter einstückiger Körper ausgebildet, wobei die Lichtleitabschnitte gemeinsam einen Volumenanteil von mindestens 30 %, insbesondere mindestens 50 %, insbesondere mindestens 70 % des Linsenkörpers ausbilden. Besonders bevorzugt weist der Linsenkörper mindestens drei, insbesondere mindestens fünf Lichtleitabschnitte auf, die jeweils lateral zueinander benachbart angeordnet sind, d. h. lateral nebeneinander aufgereiht sind, wobei bei dem Begriff "lateral benachbart" jeweils auf die dem jeweiligen Lichtleitabschnitt zugeordnete laterale Richtung abgestellt ist. Besonders bevorzugt bilden in der horizontalen Schnittebene die Lichtleitabschnitte gemeinsam mindestens 80 %, insbesondere 100 % des mit Material gefüllten Querschnitts des Linsenkörpers in der horizontalen Schnittebene aus, wobei eine solche horizontale Schnittebene über mindestens 20 % der vertikalen Erstreckung des Linsenkörpers durchgehend vorliegt. Besonders bevorzugt beträgt die laterale Erstreckung des Freiraums zwischen zwei lateral benachbarten Lichtleitabschnitten über mindestens 70 % des durchgehenden Verlaufs der beiden Lichtleitabschnitte höchstens das Dreifache, insbesondere höchstens das Zweifache, insbesondere höchstens den Betrag der jeweiligen lateralen Erstreckung der beiden Lichtleitabschnitte, wobei dies innerhalb des genannten Verlaufs für jede Stelle des Verlaufs gilt. Die erläuterten bevorzugten Ausführungsformen sowie im Weiteren angegebene bevorzugte Ausführungsformen sind selbstverständlich besonders vorteilhaft miteinander kombinierbar.

Das erfindungsgemäße Optikelement weist im Vergleich zu herkömmlichen Optikelementen eine Vielzahl an Vorteilen auf. Zum einen ist eine präzise Herstellung eines Optikelements durch das Vorsehen von lateral voneinander beabstandeten Lichtleitabschnitten erheblich vereinfacht. Denn durch die lateral voneinander beabstandeten Lichtleitabschnitte lässt sich ein Linsenkörper und somit ein Optikelement mit einer komplexen geometrischen Form realisieren, ohne dass hierbei an verschiedenen Stellen des Optikelements erheblich unterschiedliche Materialstärken vorgesehen werden müssen. Dies kann bei dem erfindungsgemäßen Optikelement vielmehr durch die alternierende Anordnung von Lichtleitabschnitten und Freiräumen zwischen den Lichtleitabschnitten erreicht werden, wobei durch die Gestaltung der Geometrie der Lichtleitabschnitte und der Freiräume die Gesamtgeometrie des Optikelements festgelegt werden kann. Darüber hinaus ermöglicht das Vorsehen der Lichtleitabschnitte eine besonders gezielte Lichtführung in dem Optikelement. Denn in jedem Lichtleitabschnitt kann Licht, das über den Lichteinkoppelabschnitt in den Linsenkörper eingekoppelt wurde, gezielt zwischen seinen lateralen Erstreckungsenden geführt werden. Für das Bereitstellen einer besonders komplexen, gezielten Lichtführung kann insbesondere das Vorsehen von Lichtleitabschnitten mit gekrümmten durchgehenden Verläufen vorteilhaft sein. Gleichzeitig kann durch die verteilte Anordnung von Lichtleitabschnitten und Freiräumen zwischen den Lichtleitabschnitten, insbesondere bei dem Vorsehen von Freiräumen mit im Vergleich zu den Lichtleitabschnitten geringen lateralen Erstreckungen, durch das Optikelement eine zumindest annähernd homogene Abstrahlung von Licht über den Lichtauskoppelabschnitt hinweg gewährleistet sein. Beispielsweise kann der Lichtauskoppelabschnitt zumindest abschnittsweise durch die Lichtleitabschnitte selbst ausgebildet sein. Beispielsweise kann der Lichtauskoppelabschnitt durch einen Körperabschnitt des Linsenkörpers zumindest abschnittsweise ausgebildet sein, der die Lichtleitabschnitte lichtleitend miteinander verbindet. Allgemein kann durch die lichtleitende Verbindung der Lichtleitabschnitte sichergestellt sein, dass von einer Lichtquelle ausgehendes Licht möglichst verlustfrei homogen in die Lichtleitabschnitte gelangt und/oder von den Lichtleitabschnitten Licht möglichst verlustfrei und homogen ausgekoppelt wird. Darüber hinaus kann über die lichtleitende Verbindung der Lichtleitabschnitte gleichzeitig eine mechanische Verbindung der Lichtleitabschnitte gewährleistet sein, wodurch das Optikelement einfach handzuhaben ist.

In einer Ausführungsform sind zumindest die Mehrzahl der Lichtleitabschnitte über einen ersten Körperabschnitt des Linsenkörpers lichtleitend miteinander verbunden, der zumindest einen Abschnitt des Lichteinkoppelabschnitts bildet. Besonders bevorzugt verläuft dieser erste Körperabschnitt ausgehend von einem vertikalen Ende eines jeden dieser Lichtleitabschnitte als vertikale Verlängerung des jeweiligen Lichtleitabschnitts ununterbrochen bis hin zum Lichteinkoppelabschnitt. Dabei ist zu berücksichtigen, dass dieses vertikale Ende eines Lichtleitabschnitts durch die vertikale Position definiert wird, an dem die laterale Beabstandung des Lichtleitabschnitts von seinen beiden lateral benachbarten Lichtleitabschnitten und somit der Lichtleitabschnitt endet. Besonders bevorzugt verläuft dieser erste Körperabschnitt ausgehend von einem horizontalen Ende eines jeden dieser Lichtleitabschnitte als horizontale Verlängerung des jeweiligen Lichtleitabschnitts ununterbrochen bis hin zum Lichteinkoppelabschnitt. Dabei ist zu berücksichtigen, dass dieses horizontale Ende eines Lichtleitabschnitts durch die horizontale Position definiert wird, an dem die laterale Beabstandung des Lichtleitabschnitts von seinen beiden lateral benachbarten Lichtleitabschnitten und somit der Lichtleitabschnitt endet. Erfindungsgemäß sind zumindest eine Mehrzahl der Lichtleitabschnitte über einen zweiten Körperabschnitt des Linsenkörpers lichtleitend miteinander verbunden, der zumindest einen Abschnitt des Lichtauskoppelabschnitts bildet. Der zweite Körperabschnitt ist an einem zweiten vertikalen Ende eines jeden dieser Lichtleitabschnitte angeordnet und als in der Vertikalen verlaufende Verlängerung eines jeden der Lichtleitabschnitte ausgebildet, wobei er von diesem zweiten vertikalen Ende ununterbrochen bis zum Lichtauskoppelabschnitt verläuft. Insbesondere die beiden vorgenannten beschriebenen besonders vorteilhaften Ausführungsformen können miteinander kombiniert sein. Besonders bevorzugt sind die Lichtleitabschnitte sowie der erste und/oder zweite Körperabschnitt als einstückiges Bauteil ausgebildet, insbesondere in einem einzigen Verfahrensschritt einstückig hergestellt. Besonders bevorzugt ist der gesamte Linsenkörper in einem einheitlichen Herstellungsverfahren direkt einstückig hergestellt. Allgemein sei an dieser Stelle angemerkt, dass vorliegend bei der Beschreibung von Ausführungsbeispielen mit Bezug auf eine Mehrzahl von Elementen und ihren Eigenschaften stets ein Ausführungsbeispiel umfasst ist, bei dem sämtliche Elemente diese Eigenschaften aufweisen. Die genannten besonders vorteilhaften Ausführungsformen bringen den besonderen Vorteil mit sich, dass der Lichteinkoppelabschnitt und/oder der Lichtauskoppelabschnitt mit einem ersten bzw. einem zweiten Körperabschnitt in die Lichteinkoppelabschnitte übergeht, wodurch eine besonders verlustfreie und gleichmäßige Lichtführung von dem Lichteinkoppelabschnitt bzw. dem Lichtauskoppelabschnitt in die mit ihm verbundenen Lichtleitabschnitte gewährleistet sein kann.

In einer Ausführungsform sind zumindest eine Mehrzahl der Lichtleitabschnitte an einem ersten ihrer Längsenden lichtleitend miteinander verbunden, wobei insbesondere zumindest diese Mehrzahl der Lichtleitabschnitte ausgehend von ihrem jeweiligen ersten Längsende bis hin zu ihrem gegenüberliegenden zweiten Längsende ununterbrochen voneinander beabstandet sind. Die Verbindung der Lichtleitabschnitte an ihren ersten Längsenden bezieht sich selbstverständlich auf eine konkrete horizontale Schnittebene. Besonders bevorzugt trifft dies für sämtliche horizontale Schnittebenen zu, die sich in einem ununterbrochenen vertikalen Abschnitt des Linsenkörpers befinden, der mindestens 20 % der gesamten vertikalen Erstreckung des Linsenkörpers einnimmt, insbesondere mindestens 50 % dieser Erstreckung des Linsenkörpers. Allgemein kann die horizontale und vertikale Erstreckung für jeden der Lichtleitabschnitte des Linsenkörpers in einem Ausführungsbeispiel dadurch festgelegt sein, dass als Lichtleitabschnitt ein solcher Abschnitt des Linsenkörpers definiert wird, der lateral von benachbarten Abschnitten des Linsenkörpers beabstandet ist, so dass über diese Definition per se festgelegt ist, dass sich die Lichtleitabschnitte über ihre gesamte Erstreckung entlang ihres durchgehenden Verlaufs und entlang ihrer vertikalen und horizontalen Erstreckung lateral voneinander beabstandet sind. Besonders bevorzugt sind zumindest eine Mehrzahl der Lichtleitabschnitte an einem ersten ihrer vertikalen Erstreckungsenden lichtleitend miteinander verbunden, wobei insbesondere zumindest diese Mehrzahl der Lichtleitabschnitte ausgehend von ihrem jeweiligen ersten vertikalen Ende bis hin zu ihrem gegenüberliegenden zweiten vertikalen Ende ununterbrochen voneinander beabstandet sind. Besonders bevorzugt sind eine Mehrzahl der Lichtleitabschnitte des Linsenkörpers sowohl an einem ersten ihrer Längsenden als auch an einem ersten ihrer vertikalen Erstreckungsenden lichtleitend miteinander verbunden. Besonders bevorzugt sind eine Mehrzahl der Lichtleitabschnitte an einem ersten ihrer Längsenden lichtleitend miteinander verbunden und bilden mit ihrem zweiten Längsende ein Erstreckungsende des Linsenkörpers. Besonders bevorzugt sind eine Mehrzahl der Lichtleitabschnitte an einem ersten ihrer vertikalen Erstreckungsenden lichtleitend miteinander verbunden und bilden mit ihren zweiten vertikalen Erstreckungsenden ein Erstreckungsende des Linsenkörpers. Besonders bevorzugt erfolgt die Verbindung der Lichtleitabschnitte über zumindest einen wie oben definierten Körperabschnitt des Linsenkörpers.

In einer Ausführungsform erstrecken sich zumindest eine Mehrzahl der Lichtleitabschnitte über mindestens 50 %, insbesondere über mindestens 70 % einer vertikalen Erstreckungslänge des Linsenkörpers, wobei sie über ihre gesamte vertikale Erstreckungslänge hin weg voneinander lateral beabstandet sind. In einer Ausführungsform bezieht sich dies auf die absolute vertikale Erstreckungslänge des Linsenkörpers, d. h. auf seine maximale vertikale Erstreckungslänge über seine horizontale Erstreckung hin weg. In einer anderen Ausführungsform bezieht sich dies auf die vertikale Erstreckungslänge, die der Linsenkörper mit Bezug auf einen bestimmten Lichtleitabschnitt innerhalb der horizontalen Gesamterstreckung des Lichtleitabschnitts maximal aufweist, wobei dann dieser bestimmte Lichtleitabschnitt einen entsprechenden Anteil von zumindest 50 %, insbesondere zumindest 70 % dieser vertikalen Erstreckungslänge des Linsenkörpers aufweist, wobei dies zumindest für die Mehrzahl der Lichtleitabschnitte gilt. In einer weiteren Ausführungsform, die mit der beschriebenen Ausführungsform insbesondere kombinierbar ist, ist zumindest über 50 % der vertikalen Erstreckungslänge des Linsenkörpers hinweg in jeder horizontalen Schnittebene mindestens 50 % der flächigen Erstreckung des Linsenkörpers durch die Mehrzahl der Lichtleitabschnitte ausgebildet. Die flächige Erstreckung des Linsenkörpers bezeichnet dabei die flächige Erstreckung, die der Linsenkörper mit Vollmaterial aufweist, so dass Freiräume nicht zu dieser flächigen Erstreckung zählen. Bei den beschriebenen besonders vorteilhaften Ausführungsformen besteht ein erheblicher Anteil des Linsenkörpers aus den Lichtleitabschnitten, was für die Herstellung des Linsenkörpers besonders vorteilhaft ist.

In einer Ausführungsform ist der Lichteinkoppelabschnitt durch ein horizontales Erstreckungsende des Linsenkörpers ausgebildet, wobei sich die Lichtleitabschnitte horizontal von dem Lichteinkoppelabschnitt weg erstrecken. Der Lichteinkoppelabschnitt ist bei dieser Ausführungsform somit durch eine horizontale Seite des Linsenkörpers ausgebildet, wobei sich die Lichtleitabschnitte von dieser Seite weg erstrecken. Besonders bevorzugt ist diese Seite und somit der Lichteinkoppelabschnitt durch einen ersten Körperabschnitt des Linsenkörpers gebildet, der dann an seiner von dem Lichteinkoppelabschnitt wegweisenden Seite in die Lichtleitabschnitte übergeht. In einer anderen Ausführungsform ist der Lichteinkoppelabschnitt innerhalb der horizontalen Erstreckung des Linsenkörpers angeordnet, wobei die Lichtleitabschnitte horizontal um den Lichteinkoppelabschnitt verteilt angeordnet sind und sich von dem Lichteinkoppelabschnitt weg erstrecken. In einer Ausführungsform sind die Lichtleitabschnitte umfänglich um den Lichteinkoppelabschnitt verteilt angeordnet, insbesondere umfänglich gleichmäßig um den Lichteinkoppelabschnitt verteilt angeordnet. In einer Ausführungsform sind sie um einen Umfangswinkel von zumindest 180° umfänglich um den Lichteinkoppelabschnitt verteilt angeordnet, in einer Ausführungsform um mindestens einen Umfangswinkel von 270° umfänglich verteilt, in einer Ausführungsform vollumfänglich, d. h. mit einem Umfangswinkel von 360° umfänglich um den Lichteinkoppelabschnitt verteilt angeordnet. In einer Ausführungsform ist der Lichteinkoppelabschnitt in einer horizontalen Richtung zwischen sich in dieser horizontalen Richtung gegenüberliegenden Lichtleitabschnitten angeordnet und verbindet insbesondere diese Lichtleitabschnitte miteinander, wobei er insbesondere jeweils zwischen einem Paar sich gegenüberliegender Lichtleitabschnitte angeordnet ist. Die Lichtleitabschnitte liegen somit einander gegenüber und sind über den Lichteinkoppelabschnitt voneinander beabstandet. In einer weiteren, mit den vorgenannten Ausführungsformen kombinierbaren Ausführungsform bilden die Lichtleitabschnitte eine sternförmige Anordnung um den Lichteinkoppelabschnitt und sind über den Lichteinkoppelabschnitt miteinander verbunden. Der Lichteinkoppelabschnitt bildet somit das Zentrum der sternförmigen Anordnung der Lichtleitabschnitte. Über die Anordnung des Lichteinkoppelabschnitts horizontal innerhalb der Erstreckung des Linsenkörpers mit um den Lichteinkoppelabschnitt verteilten Lichtleitabschnitten kann besonders vorteilhaft ein Optikelement bereitgestellt werden, das Licht, das von einer an dem Lichtquellenpunkt des Optikelements angeordneten Lichtquelle emittiert wird und zu dem Lichteinkoppelabschnitt gelangt, über einen breiten Abstrahlwinkel und/oder über eine breite Abstrahlfläche abstrahlt.

In einer Ausführungsform bilden die Lichtleitabschnitte zumindest ein vertikales Ende des Linsenkörpers aus. Wie erläutert sind die Lichtleitabschnitte lateral voneinander beabstandet, so dass an diesem vertikalen Ende des Linsenkörpers Freiräume zwischen den Lichtleitabschnitten vorgesehen sind. Eine entsprechende Ausgestaltung kann besondere Vorteile mit sich bringen. Denn durch das Vorsehen von Freiräumen zwischen den Lichtleitabschnitten, die ein vertikales Ende des Linsenkörpers ausbilden, können andere Elemente innerhalb dieser Freiräume angeordnet werden, wodurch das Optikelement besonders platzsparend und effizient in Gegebenheiten integriert werden kann, beispielsweise in Gegebenheiten einer Leuchte. Besonders vorteilhaft können zwei entsprechend ausgebildete Optikelemente zu einer erfindungsgemäßen Optikanordnung kombiniert werden, wobei sie so aneinander gefügt werden, dass sie mit ihren vertikalen Enden, die jeweils durch die Lichtleitabschnitte der jeweiligen Optikelemente ausgebildet werden, ineinandergesteckt werden, so dass zumindest einige der Lichtleitabschnitte eines ersten der beiden Optikelemente horizontal zwischen Lichtleitabschnitten eines zweiten der beiden Optikelemente angeordnet sind. Durch das abschnittsweise Ineinanderanordnen der Optikelemente kann eine sehr kompakte Optikanordnung bereitgestellt sein, mit der auch komplexe Abstrahlcharakteristiken realisiert werden können, nachdem Licht über die Lichteinkoppelabschnitte der beiden Optikelemente in die beiden Optikelemente eingekoppelt wurde. In einer besonders vorteilhaften Ausführungsform sind in der Optikanordnung die Lichteinkoppelabschnitte der beiden Optikelemente ineinandergesteckt. Dies ermöglicht, eine Lichtquelle relativ zu beiden Lichteinkoppelabschnitten der beiden Optikelemente so anzuordnen, dass von ihr ausgesandtes Licht über die Lichteinkoppelabschnitte in beide Optikelemente eingekoppelt wird. Die Lichtquelle kann somit insbesondere an einem gemeinsamen Lichtquellenpunkt beider Optikelemente angeordnet werden. Besonders bevorzugt sind die Lichteinkoppelabschnitte der beiden Optikelemente in der Optikanordnung so ineinandergesteckt, dass sie sich beide entlang einer selben horizontalen Ebene erstrecken. Besonders bevorzugt sind die Lichteinkoppelabschnitte der beiden Optikelemente jeweils durch Lichtleitabschnitte der beiden Optikelemente ausgebildet, wobei in der Optikanordnung die Lichteinkoppelabschnitte so ineinandergesteckt sind, dass zumindest einige den Lichteinkoppelabschnitt des ersten Optikelements ausbildende Lichtleitabschnitte des ersten Optikelements zwischen den Lichteinkoppelabschnitt des zweiten Optikelements ausbildenden Lichtleitabschnitten des zweiten Optikelements angeordnet sind.

In einer Ausführungsform eines erfindungsgemäßen Optikelements ist lateral zwischen zwei benachbarten Lichtleitabschnitten des Linsenkörpers ein Zwischenraum vorgesehen, der in der horizontalen Schnittebene einen V-förmigen Querschnitt aufweist. Besonders bevorzugt weist dabei die Spitze des V zur Lichteinkoppelseite. Dadurch kann eine über einen weiten Bereich möglichst gleichmäßige Verteilung von Licht über die Lichtleitabschnitte ausgehend von einer Lichtquelle ermöglicht sein.

In einer Ausführungsform verläuft der Lichtauskoppelabschnitt entlang einer horizontalen Ebene. Beispielsweise kann der Lichtauskoppelabschnitt, der einen Oberflächenabschnitt des Linsenkörpers darstellt, eben ausgebildet sein und somit in der horizontalen Ebene verlaufen. Beispielsweise kann der Lichtauskoppelabschnitt mit seinem gemittelten Verlauf in der horizontalen Ebene verlaufen. Über das Vorsehen eines entlang einer horizontalen Ebene verlaufenden Lichtauskoppelabschnitts kann eine Verteilung von Licht ausgehend von einer Lichtquelle, deren Licht in den Lichteinkoppelabschnitt des Optikelements eingekoppelt wird, über einen großen horizontalen Bereich gewährleistet sein.

Erfindungsgemäß weist zumindest eine Mehrzahl der Lichtleitabschnitte eine vertikale Erstreckungslänge auf, die sich mit zunehmendem horizontalem Abstand von dem Lichteinkoppelabschnitt verringert. Hierdurch kann gezielt Einfluss auf die Auskoppelung von Licht aus den Lichtleitabschnitten genommen werden. Durch die zunehmende Verringerung der vertikalen Erstreckungslänge kann mit zunehmendem horizontalem Abstand von dem Lichteinkoppelabschnitt der Anteil des aus dem Lichtleitabschnitt ausgekoppelten Lichts vergrößert sein. Dadurch kann eine über die horizontale Erstreckung des Lichtleitabschnitts von dem Lichteinkoppelabschnitt hinweg möglichst konstante Lichtauskoppelung, d. h. eine möglichst konstante ausgekoppelte Lichtintensität, gewährleistet sein. Besonders bevorzugt verringert sich die vertikale Erstreckungslänge des jeweiligen Lichtleitabschnitts stufenweise. In einer anderen Ausführungsform verringert sich die vertikale Erstreckungslänge kontinuierlich. Allgemein sei an dieser Stelle nochmals angemerkt, dass die vorgenannten vorteilhaften Ausführungsformen eines erfindungsgemäßen Optikelements miteinander kombinierbar sind. Bei Beschreibungen, die sich auf eine Mehrzahl der Lichtleitabschnitte bezieht, können insbesondere Ausführungsformen realisiert sein, bei der ein und dieselbe Mehrzahl Eigenschaften aufweist, die in den obigen Ausführungen mit Bezug auf unterschiedliche Ausführungsformen jeweils für eine beliebige Mehrzahl beschrieben sind.

Die Erfindung betrifft ferner eine Optikanordnung umfassend zumindest zwei erfindungsgemäße Optikelemente. Bei der erfindungsgemäßen Optikanordnung sind zumindest einige, insbesondere die Mehrheit der Lichtleitabschnitte eines ersten der Optikelemente horizontal zwischen Lichtleitabschnitten eines zweiten der Optikelemente angeordnet, wobei sich diese Lichtleitabschnitte des ersten Optikelements jeweils mit Lichtleitabschnitten des zweiten Optikelements vertikal überlappen. Hierdurch kann eine besonders kompakte und eine komplexe Lichtleitführung gewährleistende Optikanordnung gewährleistet sein. Beispielsweise können bei einem Optikelement die Lichtleitabschnitte hierzu fingerförmig angeordnet sein und in korrespondierende Freiräume zwischen Lichtleitabschnitten des zweiten Optikelements angeordnet sein. Beispielsweise können die Lichtleitabschnitte von zumindest einem der Optikelemente, insbesondere von erstem und zweitem Optikelement, zumindest ein vertikales Ende des Linsenkörpers ausbilden, wobei in der Optikanordnung die Optikelemente vertikal ineinandergesteckt sind. Besonders bevorzugt ist jeder Lichtleitabschnitt des ersten Optikelements horizontal zwischen zwei Lichtleitabschnitten des zweiten Optikelements und jeder Lichtleitabschnitt des zweiten Optikelements horizontal zwischen zwei Lichtleitabschnitten des ersten Optikelements angeordnet.

In einer Ausführungsform weist eine Oberflächennormale, die dem Lichtauskoppelabschnitt des ersten Optikelements zugeordnet ist, in dieselbe oder in die entgegengesetzte Richtung einer Oberflächennormale, die dem Lichtauskoppelabschnitt des zweiten Optikelements zugeordnet ist. Eine Optikanordnung, bei der die Oberflächennormalen der Lichtauskoppelabschnitte der beiden Optikelemente in dieselbe Richtung weisen, kann beispielsweise Abstrahlung von Licht mit zwei unterschiedlichen Lichtverteilungskurven ermöglichen, wenn die beiden Optikelemente jeweils eine unterschiedliche Lichtverteilung von Licht bereitstellen, das an ihren Lichteinkoppelabschnitten in sie eingekoppelt wird. An dieser Stelle sei darauf hingewiesen, dass jedes Optikelement eine bestimmte, ihm zugeordnete Lichtverteilung bereitstellt. Diese Lichtverteilung, die durch ein Optikelement bereitgestellt wird, ergibt sich aus der geometrischen Struktur des Optikelements umfassend seinen Lichteinkoppelabschnitt, seinen Lichtauskoppelabschnitt und seine Lichtleitabschnitte. Darüber hinaus ist die Lichtverteilung, die durch ein Optikelement bereitgestellt wird, durch das Material festgelegt, aus dem das Optikelement besteht. Dem Fachmann ist die Einstellung der durch ein Optikelement bereitgestellten Lichtverteilung durch Wahl seiner geometrischen Gestalt und seines Materials hinlänglich bekannt. Eine Optikanordnung, bei der die beiden Oberflächennormalen der Lichtauskoppelabschnitte der beiden Optikelemente in zueinander entgegengesetzte Richtungen weisen, kann eine Abstrahlung von Licht, das von an ihren Lichteinkoppelabschnitten angeordneten Lichtquellen emittiert wird, in zwei entgegengesetzte Richtungen gewährleisten. Besonders bevorzugt weist bei der erfindungsgemäßen Optikanordnung eine Oberflächennormale des Lichtauskoppelabschnitts des ersten Optikelements vertikal nach oben und eine Oberflächennormale des Lichtauskoppelabschnitts des zweiten Optikelements vertikal nach unten. Die Oberflächennormale steht senkrecht auf dem durch den jeweiligen Lichtauskoppelabschnitt definierten Oberflächenabschnitt des jeweiligen Optikelements und weist von diesem Oberflächenabschnitt senkrecht weg. Bei dem Vorsehen eines gekrümmten Lichtauskoppelabschnitts steht die Oberflächennormale senkrecht auf dem mittleren Verlauf des Lichtauskoppelabschnitts. Bei der besonders vorteilhaften erfindungsgemäßen Optikanordnung kann eine Abstrahlung von Licht in zwei gegenüberliegende vertikale Richtungen gewährleistet sein, das zuvor von einer Lichtquelle in die Lichteinkoppelabschnitte der beiden Optikelemente eingekoppelt wurde.

In einer Ausführungsform sind an dem Lichteinkoppelabschnitt des ersten Optikelements LEDs mit einer ersten Lichtfarbe angeordnet und an dem Lichteinkoppelabschnitt des zweiten Optikelements LEDs mit einer zweiten Lichtfarbe angeordnet, wobei sich die erste Lichtfarbe von der zweiten Lichtfarbe unterscheidet. Besonders bevorzugt ist die erste Lichtfarbe eine Lichtfarbe von unter 3600 K, insbesondere unter 3300 K, und die zweite Lichtfarbe eine Lichtfarbe von über 5000 K, insbesondere von über 5300 K. Eine solche Optikanordnung kann sich besonders gut zum Mischen von Lichtfarben oder alternativ zum Ausleuchten von unterschiedlichen Bereichen mit jeweils unterschiedlichen Lichtfarben eignen. Herstellungstechnisch können die beiden Optikelemente jeweils mit LEDs einer bestimmten Lichtfarbe bestückt werden und sodann zueinander zur Optikanordnung kombiniert werden. Bei einer Ausrichtung der Oberflächennormalen der Lichtauskoppelabschnitte der beiden Optikelemente in dieselbe Richtung kann beispielsweise eine besonders gute Durchmischung von Licht mit den beiden unterschiedlichen Lichtfarben bereitgestellt werden. Dabei ist zu berücksichtigen, dass die Richtung der Oberflächennormalen die gemittelte Abstrahlrichtung der Optikelemente angibt. Bei dem Vorsehen von Oberflächennormalen, die in unterschiedliche Richtungen weisen, können gezielt unterschiedliche Bereiche mit unterschiedlichen Lichtfarben ausgeleuchtet werden. Besonders bevorzugt ist zumindest einigen, insbesondere sämtlichen, Lichtleitabschnitten oder jeweils einer Gruppe von Lichtleitabschnitten des ersten Optikelements jeweils genau eine der LEDs mit der ersten Lichtfarbe oder genau eine festgelegte Gruppe dieser LEDs zugeordnet und jedem der zumindest einigen, insbesondere sämtlichen, Lichtleitabschnitte oder jeweils einer Gruppe von Lichtleitabschnitten des zweiten Optikelements jeweils genau eine LED mit der zweiten Lichtfarbe oder genau eine festgelegte Gruppe dieser LEDs zugeordnet. Unter der Zuordnung genau einer LED zu einem Lichtleitabschnitt bzw. zu einer Gruppe an Lichtleitabschnitten wird vorliegend verstanden, dass diese LED so an dem Lichteinkoppelabschnitt des jeweiligen Optikelements angeordnet ist, dass mindestens 80 %, insbesondere mindestens 90 % des von dieser LED ausgesandten Lichts in den ihr zugeordneten Lichtleitabschnitt bzw. in die zugeordnete Gruppe an Lichtleitabschnitten gelangt. Besonders bevorzugt sind die verschiedenen LEDs, die an dem Lichteinkoppelabschnitt eines der Optikelemente angeordnet sind, so relativ zu einem bestimmten Lichtleitabschnitt angeordnet, der einer bestimmten der LEDs zugeordnet ist, dass in einem Betriebszustand, in dem die LEDs sämtlich Licht abstrahlen, mehr als 80 % des Lichts, das in den einen bestimmten Lichtleitabschnitt gelangt, von der LED oder der Gruppe an LEDs ausgesandt wird, die ihm zugeordnet ist. Durch die Zuordnung von einzelnen LEDs oder Gruppen an LEDs zu einzelnen Lichtleitabschnitten kann durch eine Steuerung der LEDs besonders gezielt Einfluss auf die Abstrahlcharakteristik der Optikanordnung genommen werden, da zur Gewährleistung einer bestimmten Abstrahlcharakteristik nur solche LEDs eingeschaltet werden können, die bestimmten Lichtleitabschnitten mit einer bestimmten geometrischen Form zugeordnet sind.

Besonders bevorzugt ist dem ersten Optikelement eine erste Lichtverteilungskurve und in dem zweiten Optikelement eine zweite Lichtverteilungskurve zugeordnet, wobei sich die beiden Lichtverteilungskurven voneinander unterscheiden. Die einem Optikelement zugeordnete Lichtverteilungskurve ist wie erläutert durch das Material und die Form des Optikelements bestimmt und ergibt sich aus der Lichtverteilung, die das jeweilige Optikelement bereitstellt. Dem Fachmann ist geläufig, die Lichtverteilungskurve eines Optikelements auszumessen um zu bestimmen, in welche Richtungen das Optikelement welchen Anteil des Lichts abstrahlt, das ausgehend von einem oder mehreren Lichtquellenpunkten, der bzw. die seinem Lichteinkoppelabschnitt zugeordnet ist, in seinen Lichteinkoppelabschnitt eingekoppelt wurde. Durch das Vorsehen von zwei Optikelementen mit unterschiedlichen Lichtverteilungskurven kann bei dem Einsatz der erfindungsgemäßen besonders vorteilhaften Optikanordnung in einer Leuchte eine Variabilität der von der Leuchte abgestrahlten Lichtverteilung ermöglicht sein.

Die erfindungsgemäße Optikanordnung kann insbesondere in vorteilhaften Ausführungsformen weitere oben mit Bezug auf ein erfindungsgemäßes Optikelement oder mit Bezug auf erfindungsgemäße Optikanordnungen beschriebene Eigenschaften und Vorteile aufweisen, wobei diese Eigenschaften bzw. Vorteile insbesondere in besonders vorteilhaften Ausführungsformen miteinander kombiniert sein können.

Die Erfindung betrifft ferner eine Leuchte, die ein erfindungsgemäßes Optikelement aufweist. Insbesondere betrifft die Erfindung eine Leuchte, die eine erfindungsgemäße Optikanordnung aufweist. Besonders bevorzugt weist die Leuchte eine Lichtquelle, insbesondere LEDs, auf sowie eine Steuereinheit, die zum Ansteuern der Lichtquellen ausgebildet ist. Die Leuchte kann weitere, bei gattungsgemäßen Leuchten übliche Bestandteile aufweisen, beispielsweise ein Betriebsgerät, ein Gehäuse, eine Abdeckung, etc.

In einer Ausführungsform der erfindungsgemäßen Leuchte ist zumindest bei einer Mehrheit der Lichtleitabschnitte des von der Leuchte umfassten Optikelements oder der von der Leuchte umfassten Optikanordnung jedem der Lichtleitabschnitte oder jeweils einer Gruppe von Lichtleitabschnitten jeweils genau eine LED-Einheit zugeordnet, die an dem Lichteinkoppelabschnitt des Optikelements, das die Lichtleitabschnitte umfasst, angeordnet ist. Besonders bevorzugt umfasst die genannte Mehrheit der Lichtleitabschnitt sämtliche Lichtleitabschnitte. Besonders bevorzugt weist die Leuchte mehrere Gruppen an Lichtleitabschnitten auf, denen jeweils genau eine LED-Einheit zugeordnet ist. Selbstverständlich weist die Leuchte bei der beschriebenen Ausführungsform mehrere LED-Einheiten auf, von denen jede jeweils genau einem der Lichtleitabschnitte oder genau einer Gruppe von Lichtleitabschnitten zugeordnet ist. Die Steuereinheit ist dazu ausgebildet, eine erste Gruppe an LED-Einheiten unabhängig von einer zweiten Gruppe an LED-Einheiten anzusteuern. Eine LED-Einheit kann eine oder mehrere LEDs umfassen. Wie oben erläutert ist unter der Zuordnung einer LED-Einheit zu einem Lichtleitabschnitt bzw. zu einer Gruppe an Lichtleitabschnitten zu verstehen, dass diese LED-Einheit mindestens 80 % des von ihr ausgesandten und in den Lichteinkoppelabschnitt eingekoppelten Lichts in den ihr zugeordneten Lichtleitabschnitt bzw. in die ihr zugeordnete Gruppe an Lichtleitabschnitten abstrahlt, wobei insbesondere bei einem Einschalten sämtlicher LED-Einheiten der Leuchte über 80 % des in einen Lichtleitabschnitt eingekoppelten Lichts von der ihm zugeordneten LED-Einheit stammt. Durch die Zuordnung von LED-Einheiten zu jeweils genau einem Lichtleitabschnitt ist eine besonders gute Einstellbarkeit der Abstrahlcharakteristik der Leuchte gewährleistet. Durch das Gruppieren von LED-Einheiten und das voneinander unabhängige Ansteuern verschiedener Gruppen von LED-Einheiten kann auf sehr einfache Weise die Ansteuerung von verschiedenen, jeweils sinnvollen Abstrahlcharakteristiken der Leuchte ermöglicht sein.

In einer besonders bevorzugten Ausführungsform umfasst die erfindungsgemäße Leuchte eine Optikanordnung, wobei die Oberflächennormalen der Lichtauskoppelabschnitte der beiden Optikelemente der Optikanordnung in dieselbe Richtung weisen. Besonders bevorzugt sind an dem Lichteinkoppelabschnitt des ersten Optikelements eine erste der Gruppen an LED-Einheiten und an dem Lichteinkoppelabschnitt des zweiten Optikelements eine zweite der Gruppen an LED-Einheiten angeordnet, wobei die Steuereinheit dazu ausgebildet ist, die beiden Gruppen voneinander unabhängig anzusteuern. Hierüber kann eine Wählbarkeit einer durch die Optikanordnung bei einem Betrieb der Leuchte abstrahlten Lichtverteilung gewährleistet sein. In einer weiteren besonders vorteilhaften Ausführungsform sind die LED-Einheiten der ersten Gruppe an LED-Einheiten jeweils an Lichtleitabschnitten angeordnet, die eine erste Lichtverteilung bereitstellen, und die LED-Einheiten der zweiten Gruppen an LED-Einheiten jeweils an Lichtleitabschnitten angeordnet, die eine zweite Lichtverteilung bereitstellen. Entsprechend kann beispielsweise über die Ansteuerung der ersten bzw. zweiten Gruppe an LED-Einheiten eine Auswahl der ersten bzw. zweiten Lichtverteilung ermöglicht sein. In einer weiteren besonders vorteilhaften Ausführungsform weist die erste Gruppe an LED-Einheiten ausschließlich LEDs mit einer ersten Lichtfarbe auf und die zweite Gruppe an LED-Einheiten ausschließlich LEDs mit einer zweiten, von der ersten unterschiedlichen Lichtfarbe auf. Hierüber kann bei der erfindungsgemäßen Leuchte beispielsweise die abstrahlte Lichtfarbe gezielt beeinflusst werden. Darüber hinaus kann bei der erfindungsgemäßen Leuchte die Steuereinheit dazu ausgebildet sein, die unterschiedlichen Gruppen an LED-Einheiten unabhängig voneinander zu dimmen. Hierüber kann bei einer Ausrichtung der Oberflächennormalen der beiden Lichtauskoppelabschnitte der beiden Optikelemente in dieselbe Richtung eine Lichtdurchmischung der verschiedenen Lichtfarben gewährleistet sein und somit eine besonders große Variabilität der abgestrahlten Lichtfarbe ermöglicht sein. In einer Ausführungsform weisen die LED-Einheiten jeweils LEDs mit einer ersten und LEDs mit einer zweiten Lichtfarbe auf, wobei die LEDs mit der ersten Lichtfarbe, die einer bestimmten Gruppe an LED-Einheiten angehören, durch die Steuereinheit unabhängig von den LEDs mit einer zweiten Lichtfarbe, die dieser bestimmten Gruppe angehören, ansteuerbar sind. Bei dieser besonders bevorzugten Ausführungsform ist somit zum einen eine voneinander unabhängige Ansteuerung der Gruppen an LED-Einheiten ermöglicht und darüber hinaus eine unabhängige Ansteuerung der LEDs unterschiedlicher Lichtfarbe, die einer Gruppe an LED-Einheiten angehören, so dass innerhalb der Gruppe die von der Gruppe an LED-Einheiten abgestrahlte Lichtfarbe variiert werden kann. An dieser Stelle sei darauf hingewiesen, dass die voneinander unabhängige Ansteuerung stets das voneinander unabhängige Dimmen mitumfasst.

Die Erfindung wird nachfolgend unter Bezugnahme auf sieben Figuren anhand von Ausführungsbeispielen näher erläutert.

Es zeigen:
- Figur 1:: in Prinzipdarstellungen verschiedene Ansichten einer Ausführungsform eines erfindungsgemäßen Optikelements;
- Figur 2:: in Prinzipdarstellungen verschiedene Ansichten einer weiteren Ausführungsform eines erfindungsgemäßen Optikelements;
- Figur 3:: in einer Prinzipdarstellung eine weitere Ausführungsform eines erfindungsgemäßen Optikelements;
- Figur 4:: in einer Prinzipdarstellung eine weitere Ausführungsform eines erfindungsgemäßen Optikelements;
- Figur 5:: in Prinzipdarstellungen verschiedene Ansichten einer Ausführungsform einer erfindungsgemäßen Optikanordnung;
- Figur 6:: in Prinzipdarstellungen verschiedene Ansichten einer weiteren Ausführungsform einer erfindungsgemäßen Optikanordnung;
- Figur 7:: in Prinzipdarstellungen verschiedene Ansichten einer weiteren Ausführungsform einer erfindungsgemäßen Optikanordnung;
- Figur 8:: in Prinzipdarstellungen verschiedene Ansichten einer weiteren Ausführungsform einer erfindungsgemäßen Optikanordnung;
- Figur 9:: in einer Prinzipdarstellung einen Ausschnitt einer Ausführungsform einer erfindungsgemäßen Leuchte;
- Figur 10:: in einer Prinzipdarstellung einen Ausschnitt einer weiteren Ausführungsform einer erfindungsgemäßen Leuchte.

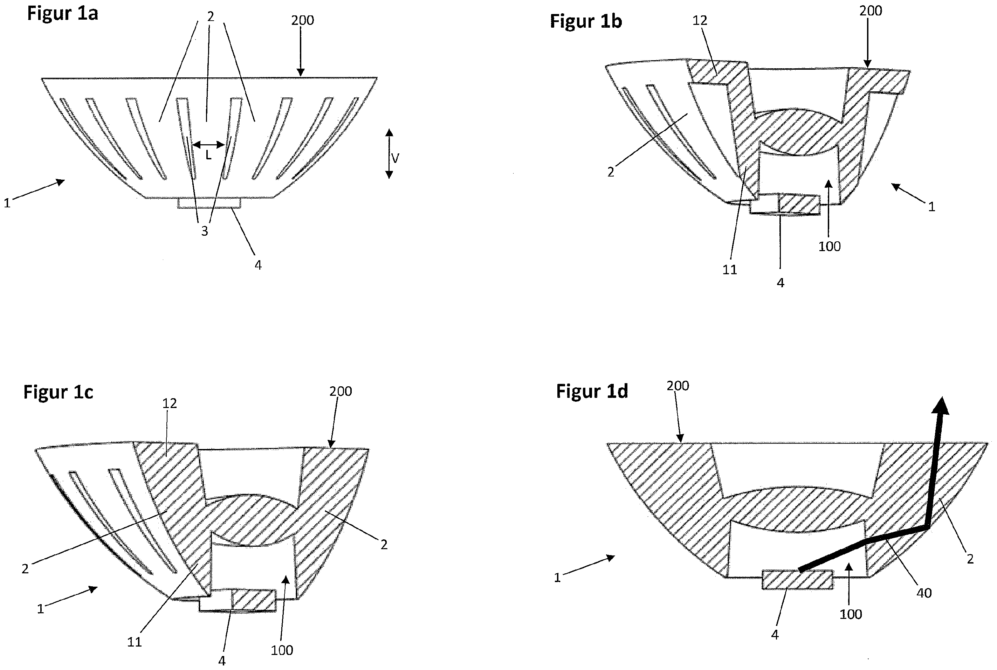

In Figur 1 umfassend die Figuren 1a, 1b, 1c und 1d sind verschiedene Ansichten eines erfindungsgemäßen Optikelements 1 in Prinzipdarstellungen dargestellt. Die nachfolgende Beschreibung bezieht sich auf die Zusammenschau der Figuren 1a, 1b, 1c und 1d. Die in Figur 1 dargestellte Ausführungsform eines erfindungsgemäßen Optikelements 1 ist als einstückiges Bauteil über Spritzguss-Verfahren hergestellt. Das Optikelement 1 weist einen Linsenkörper mit Lichtleitabschnitten 2 auf. Die Lichtleitabschnitte 2 sind solche Abschnitte des Linsenkörpers, die entlang der Vertikalen V und der Horizontalen über ihre gesamte Erstreckungslänge durch Freiräume 3 voneinander lateral beabstandet sind. In den Figuren 1b, 1c und 1d sind jeweils vertikale Schnittebenen durch den Linsenkörper des Optikelements 1 dargestellt. Während in Figur 1b ein Schnitt durch Freiräume 3 zwischen zwei benachbarten Lichtleitabschnitten 2 dargestellt ist, ist in den Figuren 1c und 1d ein Schnitt durch Lichtleitabschnitte 2 dargestellt. Jeder Lichtleitabschnitt 2 weist eine ihm zugeordnete laterale Richtung L auf und ist in seiner lateralen Richtung L von seinen lateral benachbarten Lichtleitabschnitten 2 lateral beabstandet, nämlich über den Freiraum 3 lateral beabstandet. Die laterale Richtung L steht senkrecht auf dem durchgehenden Verlauf eines jeden Lichtleitabschnitts 2, über den sich der Lichtleitabschnitt 2 in einer horizontalen Schnittebene, die in Figur 1 nicht dargestellt ist, erstreckt. Die laterale Richtung L steht ferner auch senkrecht auf der vertikalen Erstreckungsrichtung des jeweiligen Lichtleitabschnitts 2. In Figur 1a ist die laterale Richtung L für einen bestimmten Lichtleitabschnitt 2 auf diesem Lichtleitabschnitt 2 eingezeichnet. Sämtliche Lichtleitabschnitte 2 sind über einen ersten Körperabschnitt 11 des Linsenkörpers lichtleitend miteinander verbunden, der einen Abschnitt des Lichteinkoppelabschnitts 100 des Optikelements 1 ausbildet. Darüber hinaus sind sämtliche Lichtleitabschnitte 2 über einen zweiten Körperabschnitt 12 des Linsenkörpers des Optikelements 1 lichtleitend miteinander verbunden, der den Lichtauskoppelabschnitt 200 bildet. Die Lichtleitabschnitte 2 gehen dabei kontinuierlich in den ersten Körperabschnitt 11 und in den zweiten Körperabschnitt 12 über. Dies ist für die Lichtführung in dem Optikelement 1 besonders vorteilhaft. In Figur 1 ist erläuterungshalber ferner eine Lichtquelle 4 dargestellt, die an einem dem Optikelement 1 zugeordneten Lichtquellenpunkt angeordnet ist. Sämtliche von der Lichtquelle 4 emittierten Lichtstrahlen werden über den Lichteinkoppelabschnitt 100 in den Linsenkörper des Optikelements 1 eingekoppelt. Der überwiegende Anteil des eingekoppelten Lichts verläuft anschließend in den Lichtleitabschnitten 2, wobei bei dem vorliegend beschriebenen Ausführungsbeispiel dabei eine Totalreflektion an den Erstreckungsenden eines jeden Lichtleitabschnitts 2 erfolgt, wie dies für einen Lichtstrahl 40 in Figur 1d exemplarisch dargestellt ist. Jeder Lichtstrahl 40 wird in den Lichtleitabschnitten 2 geführt, bis er in den zweiten Körperabschnitt 12 gelangt und über den Lichtauskoppelabschnitt 200 aus dem Optikelement 1 austritt. Allgemein sei an dieser Stelle angemerkt, dass sich die vorliegende Beschreibung bevorzugt auf sichtbares Licht, bevorzugt auf Licht mit einer Wellenlänge zwischen 500 nm und 700 nm bezieht. Aus Figur 1 ist ferner ersichtlich, dass lateral zwischen zwei benachbarten Lichtleitabschnitten 2 ein Freiraum 3 vorgesehen ist, der als Zwischenraum ausgebildet ist, der in einer horizontalen Schnittebene einen V-förmigen Querschnitt aufweist, wobei die Spitze des V zum Lichteinkoppelabschnitt 100 weist. Die Spitze des V mündet vorliegend zumindest abschnittsweise in den ersten Körperabschnitt 11, der den Lichteinkoppelabschnitt 100 ausbildet, so dass von der Lichtquelle 4 ausgesandetes Licht über den Lichteinkoppelabschnitt 100 möglichst verlustfrei in die Lichtleitabschnitte 2 gelangen kann.

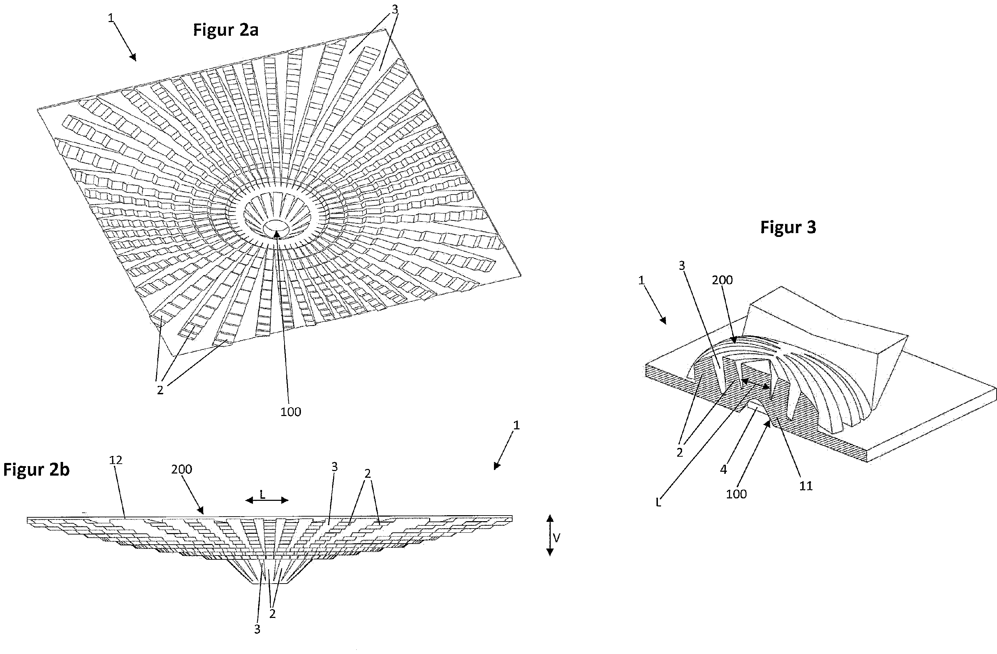

In Figur 2 umfassend die Figuren 2a und 2b ist eine weitere Ausführungsform eines erfindungsgemäßen Optikelements 1 in Prinzipdarstellungen dargestellt. Elemente, die Elementen des Ausführungsbeispiels gemäß Figur 1 ähnlich sind, sind mit identischen Bezugszeichen gekennzeichnet. Auch das Ausführungsbeispiel gemäß Figur 2 weist eine Vielzahl an Lichtleitabschnitten 2 auf, wobei dieses Ausführungsbeispiel zwei unterschiedliche Gruppen an Lichtleitabschnitten 2 aufweist. Eine erste Gruppe der Lichtleitabschnitte 2 geht in einen ersten Körperabschnitt 11 über, der den Lichteinkoppelabschnitt 100 bildet und ist umfänglich um diesen Lichteinkoppelabschnitt 100 verteilt. Eine zweite Gruppe an Lichtleitabschnitten 2 ist vertikal zu der ersten Gruppe an Lichtleitabschnitten 2 versetzt angeordnet und geht in einen zweiten Körperabschnitt 12 über, der den Lichtauskoppelabschnitt 200 ausbildet. Sämtliche Lichtleitabschnitte 2 weisen eine vertikale Erstreckungslänge auf, die sich mit zunehmendem horizontalem Abstand von dem Lichteinkoppelabschnitt 100 verringert. Während sich diese vertikale Erstreckungslänge bei der ersten Gruppe an Lichtleitabschnitten 2 kontinuierlich verringert, verringert sie sich bei der zweiten Gruppe an Lichtleitabschnitten 2 stufenweise. Bei dem Optikelement 1 gemäß Figur 2 ist wie auch bei dem Optikelement 1 gemäß Figur 1 zwischen zwei lateral benachbarten Lichtleitabschnitten 2 ein Freiraum 3 vorgesehen, der als Zwischenraum mit einem in einer horizontalen Schnittebene V-förmigen Querschnitt ausgebildet ist, wobei die Spitze des V zum Lichteinkoppelabschnitt 100 weist. In Figur 2b ist für einen bestimmten Lichtleitabschnitt 2 die ihm zugeordnete laterale Richtung L oberhalb dieses Lichtleitabschnitts 2 eingezeichnet. Im Gegensatz zu dem Optikelement 1 gemäß Figur 1 ist bei dem Optikelement 1 gemäß Figur 2 der Lichtauskoppelabschnitt 200 als geschlossene ebene Fläche ausgebildet, die sich über die gesamte horizontale Erstreckung des Optikelements 1 erstreckt. Mit dem Optikelement 1 gemäß Figur 2 lässt sich besonders vorteilhaft Licht, das mit dem Lichteinkoppelabschnitt 100 in das Optikelement 1 eingekoppelt wird, über eine sehr breite horizontale Fläche verteilen und somit über eine große Fläche des Lichtauskoppelabschnitts 200 abstrahlen.

In Figur 3 ist eine weitere Ausführungsform eines erfindungsgemäßen Optikelements 1 dargestellt. In dieser Ausführungsform ist das Optikelement nach Art einer Freiformlinse ausgebildet. In Figur 3 ist eine perspektivische Ansicht mit einem vertikalen Schnitt dargestellt. Elemente der Ausführungsform gemäß Figur 3, die ähnlich zu Elementen der Ausführungsformen gemäß Figuren 1 und 2 sind, sind mit identischen Bezugszeichen versehen. Auch bei der Ausführungsform gemäß Figur 3 sind die Lichtleitabschnitte 2 über einen ersten Körperabschnitt 11 des Linsenkörpers, der den Lichteinkoppelabschnitt 100 ausbildet, verbunden. Ferner bilden bei dem Ausführungsbeispiel gemäß Figur 3 die Lichtleitabschnitte 2 selbst zumindest abschnittsweise den Lichtauskoppelabschnitt 200 aus, und zwischen zwei lateral benachbarten Lichtleitabschnitten 2 ist ein Freiraum 3 vorgesehen, der nach Art eines Zwischenraums ausgebildet ist, der in einer horizontalen Schnittebene einen V-förmigen Querschnitt aufweist. Für einen bestimmten Lichtleitabschnitt 2 ist die ihm zugeordnete laterale Richtung L eingezeichnet.

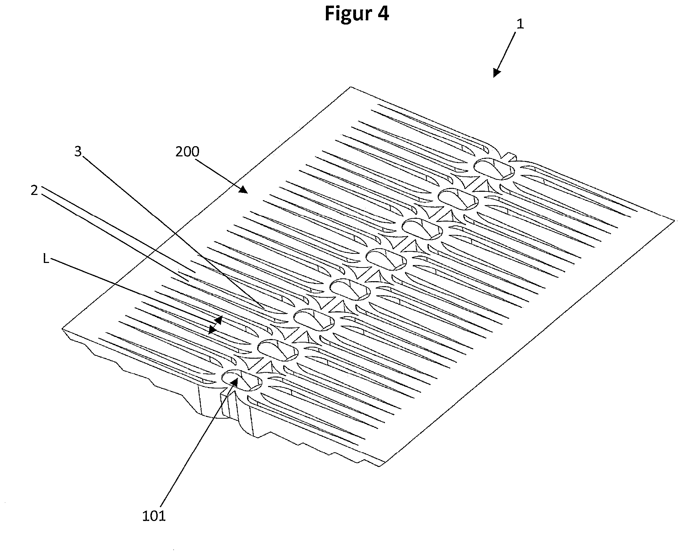

In Figur 4 ist eine weitere Ausführungsform eines erfindungsgemäßen Optikelements 1 dargestellt. Elemente des Ausführungsbeispiels gemäß Figur 4, die ähnlich zu Elementen der Ausführungsbeispiele gemäß Figuren 1 bis 3 sind, sind mit identischen Bezugszeichen versehen. Wie bei den Ausführungsbeispielen gemäß Figuren 1 bis 3 ist auch bei dem Ausführungsbeispiel gemäß Figur 4 der Lichteinkoppelabschnitt 100 horizontal innerhalb der Erstreckung des Linsenkörpers angeordnet. Während jedoch bei den Ausführungsformen gemäß den Figuren 1 bis 3 die Lichtleitabschnitte 2 horizontal über einen erheblichen Umfangswinkel um den Lichteinkoppelabschnitt 100 verteilt angeordnet sind, ist der Lichteinkoppelabschnitt 100 der Ausführungsform gemäß Figur 4 in einer horizontalen Richtung zwischen sich in der horizontalen Richtung gegenüberliegenden Lichtleitabschnitten 2 angeordnet, wobei sich die Lichtleitabschnitte 2 in der horizontalen Richtung von dem Lichteinkoppelabschnitt 100 weg erstrecken. In Figur 4 ist die Ausnehmung 101 zwischen zwei sich in der horizontalen Richtung gegenüberliegenden Lichtleitabschnitten 2 dargestellt, in der der Lichteinkoppelabschnitt 100 zwischen den beiden Lichtleitabschnitten 2 ausgebildet ist. In Figur 4 ist ferner zu erkennen, dass zwei lateral benachbarte Lichtleitabschnitte 2 stets durch einen Freiraum 3 lateral voneinander beabstandet sind, wobei der Freiraum 3 eine sich entlang der horizontalen Richtung verändernde laterale Erstreckung aufweist. In Figur 4 ist für einen bestimmten Lichtleitabschnitt 2 die ihm zugeordnete laterale Richtung L an einer Stelle seiner horizontalen Erstreckung eingezeichnet. Ferner ist aus Figur 4 zu erkennen, dass die Lichtleitabschnitte 2 jeweils eine vertikale Erstreckungslänge aufweisen, die sich mit zunehmendem horizontalem Abstand von dem Lichteinkoppelabschnitt 100 verringert.

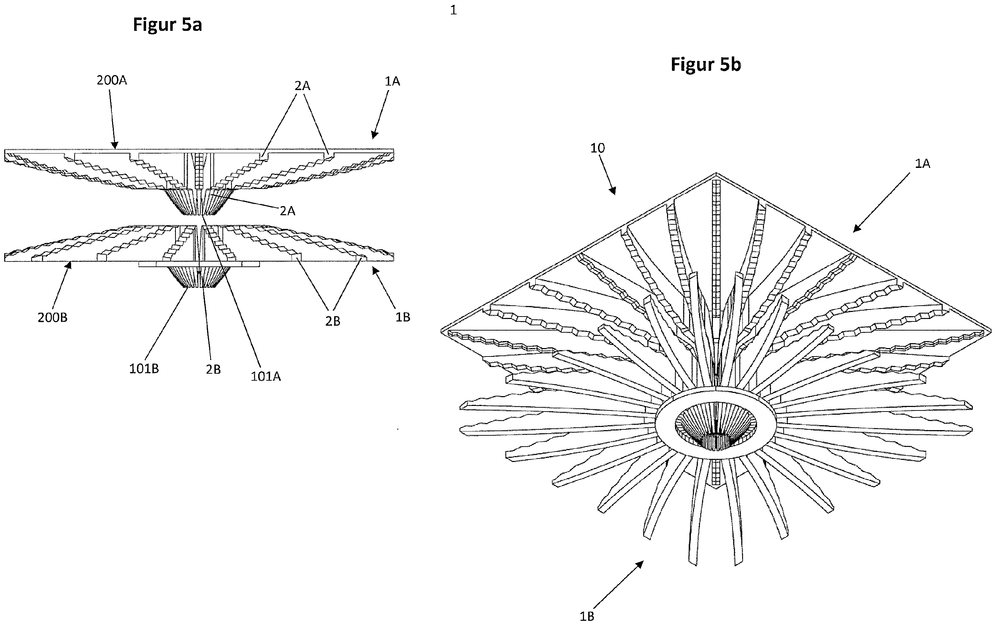

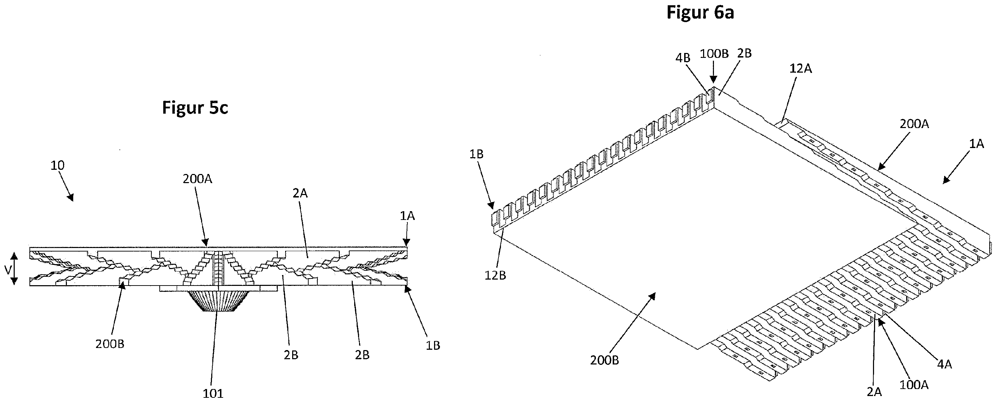

In Figur 5 umfassend die Figuren 5a, 5b und 5c ist eine erste Ausführungsform einer erfindungsgemäßen Optikanordnung 10 in Prinzipdarstellungen dargestellt. Diese Optikanordnung 10 umfasst zwei Optikelemente 1A, 1B, die jeweils als eine Ausführungsform eines erfindungsgemäßen Optikelements 1 ausgebildet sind. Die Optikelemente 1A, 1B weisen jeweils Lichtleitabschnitte 2A, 2B auf, die ein vertikales Ende des Linsenkörpers des jeweiligen Optikelements 1A, 1B ausbilden. Die Lichtleitabschnitte 2A, 2B sind jeweils über einen Freiraum 3 voneinander beabstandet, der als Zwischenraum mit V-förmigem Querschnitt ausgebildet ist. Während in den Figuren 5a, 5b die Optikelemente 1A, 1B der Optikanordnung 10 einzeln bzw. während des Zusammenbaus der Optikanordnung 10 dargestellt sind, ist in Figur 5c die erfindungsgemäße Optikanordnung 10 in ihrem hergestellten und bestimmungsgemäßen Zustand dargestellt. In diesem bestimmungsgemäßen Zustand ist jeder Lichtleitabschnitt 2A des ersten Optikelements 1A in dem Freiraum 3 zwischen zwei lateral benachbarten Lichtleitabschnitten 2B des zweiten Optikelements 1B angeordnet. Darüber hinaus sind die Lichteinkoppelabschnitte 2 der Optikelemente 1A, 1B ineinandergesteckt, so dass die Ausnehmungen 101A, 101B der Optikelemente 1A, 1B ineinander liegen und eine gemeinsame Ausnehmung 101 der Optikanordnung 10 ausbilden, die zur Aufnahme einer Lichtquelle 4 ausgebildet ist. Bei der Optikanordnung 10 ist beiden Optikelementen 1A, 1B ein selber Lichtquellenpunkt zugeordnet, an dem eine Lichtquelle 4 anzuordnen ist zum Einkoppeln der von der Lichtquelle 4 emittierten Lichtstrahlen 40 in die Lichteinkoppelabschnitte 100A, 100B der beiden Optikelemente 1A, 1B. Die Optikanordnung 10 gemäß Figur 5 ist dazu ausgebildet, bei Bestrahlung der Optikanordnung 10 ausgehend von einer in der Ausnehmung 101 in dem Lichtquellenpunkt der Optikanordnung 10 angeordneten Lichtquelle 4 Licht sowohl über den Lichtauskoppelabschnitt 200A des ersten Optikelements 1A als auch über den Lichtauskoppelabschnitt 200B des zweiten Optikelements 1B auszukoppeln. Dabei weist die Oberflächennormale des Lichtauskoppelabschnitts 200A des ersten Optikelements 1A vertikal nach oben, wohingegen die Oberflächennormale des Lichteinkoppelabschnitts 200B des zweiten Optikelements 1B nach unten weist. Eine Optikanordnung 10 gemäß Figur 5 ist somit besonders vorteilhaft zum Gewährleisten von gleichzeitig einer direkten und einer indirekten Beleuchtung unter Verwendung von nur einer Lichtquelle 4 geeignet.

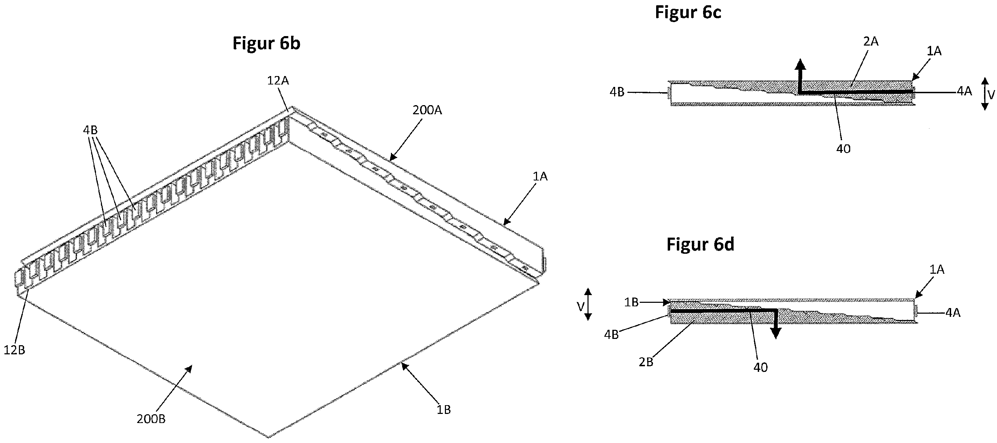

In Figur 6 umfassend die Figuren 6a, 6b, 6c und 6d ist in verschiedenen Ansichten eine weitere Ausführungsform einer erfindungsgemäßen Optikanordnung 10 in Prinzipdarstellungen dargestellt. Elemente, die ähnlich zu Elementen bereits beschriebener Ausführungsformen sind, sind mit identischen Bezugszeichen gekennzeichnet. Die Ausführungsform einer erfindungsgemäßen Optikanordnung 10 gemäß Figur 6 weist zwei Optikelemente 1A, 1B auf, die jeweils identisch ausgebildet und vertikal ineinandergesteckt sind. Jedes der Optikelemente 1A, 1B weist eine Vielzahl an Lichtleitabschnitten 2A, 2B auf, wobei zwei lateral benachbarte Lichtleitabschnitte 2A, 2B durch einen Freiraum 3 voneinander beabstandet sind, wobei die laterale Erstreckungslänge des Freiraums 3 über seine gesamte horizontale Erstreckung hinweg konstant ist. Bei den beiden Optikelementen 1A, 1B ist der Lichteinkoppelabschnitt 100A, 100B jeweils durch ein horizontales Erstreckungsende des Linsenkörpers ausgebildet, wobei sich die Lichtleitabschnitte 2A, 2B horizontal von dem Lichteinkoppelabschnitt 100A, 100B weg erstrecken. Der Lichtauskoppelabschnitt 200A, 200B ist jeweils durch ein vertikales Erstreckungsende des Linsenkörpers ausgebildet und darüber hinaus als ebene Fläche ausgebildet. In der Optikanordnung 10 weist die Oberflächennormale des Lichtauskoppelabschnitts 200A des ersten Optikelements 1A nach oben, während die Oberflächennormale des Lichtauskoppelabschnitts 200B des zweiten Optikelements 2B nach unten weist. Die Lichtauskoppelabschnitte 200A, 200B werden jeweils durch einen zweiten Körperabschnitt 12A, 12B des jeweiligen Optikelements 1A, 1B ausgebildet, über den die Lichtleitabschnitte 2A, 2B des jeweiligen Optikelements 1A, 1B miteinander verbunden sind. In der erfindungsgemäßen Optikanordnung 10 sind die Optikelemente 1A, 1B so ineinandergesteckt, dass der Lichteinkoppelabschnitt 100A des ersten Optikelements 1A ein erstes horizontales Erstreckungsende der Optikanordnung 10 ausbildet und der Lichteinkoppelabschnitt 100B des zweiten Optikelements 2B ein zweites horizontales Erstreckungsende der Optikanordnung 10 ausbildet, wobei sich diese beiden Erstreckungsenden horizontal gegenüberliegen. Die Lichtleitabschnitte 2A, 2B weisen jeweils eine vertikale Erstreckungslänge auf, die sich mit zunehmendem Abstand von ihren jeweiligen Lichteinkoppelabschnitten 100A, 100B verringert. Dadurch ist, wie insbesondere in den Figuren 6c und 6d angedeutet, eine über die horizontale Erstreckung der Lichtleitabschnitte 2A, 2B möglichst gleichmäßige Auskoppelung von Licht, das über die Lichtquelle 4A, 4B in den jeweiligen Lichtleitabschnitt 2A, 2B eingekoppelt wird, gewährleistet.

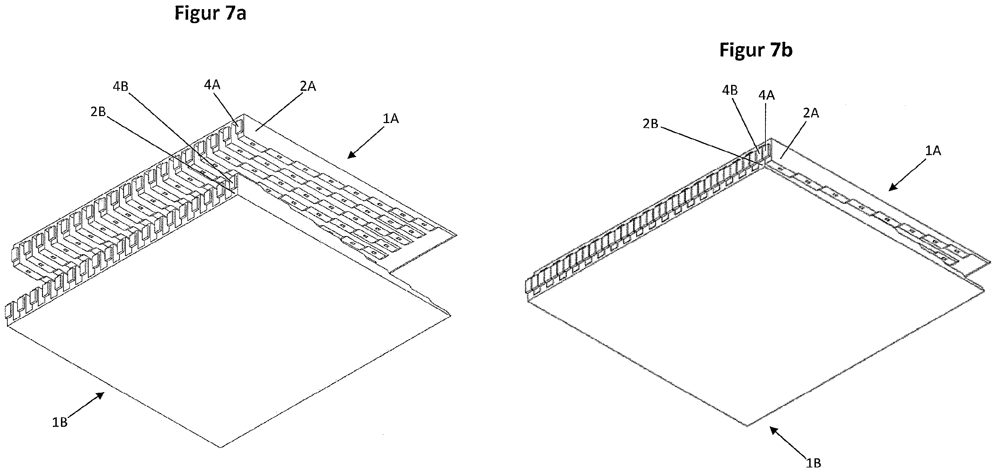

In Figur 7 umfassend die Figuren 7a und 7b ist eine weitere Ausführungsform einer erfindungsgemäßen Optikanordnung 10 in Prinzipdarstellungen dargestellt. Elemente dieser Ausführungsform, die ähnlich zu Elementen der bereits beschriebenen erfindungsgemäßen Ausführungsformen sind, sind mit identischen Bezugszeichen gekennzeichnet. Die Optikanordnung 10 gemäß Figur 7 weist zwei Optikelemente 1A, 1B auf. Die Optikelemente 1A, 1B der Ausführungsform der Optikanordnung 10 gemäß Figur 7 sind identisch zu den Optikelementen 1A, 1B wie wie zu der Ausführungsform gemäß Figur 6 erläutert ausgebildet. Auch bei der Optikanordnung gemäß Figur 7 sind diese Optikelemente 1A, 1B vertikal ineinandergesteckt. Allerdings sind die Optikelemente 1A, 1B dergestalt zueinander angeordnet, dass die Lichteinkoppelabschnitte 100A, 100B der beiden Optikelemente 1A, 1B jeweils dasselbe horizontale Erstreckungsende der Optikanordnung 10 ausbilden. Entsprechend sind bei der bestimmungsgemäßen Verwendung einer Optikanordnung 10 gemäß Figur 7 die Lichtquellen 4A, 4B, die an den Lichteinkoppelabschnitten 100A, 100B der beiden Optikelemente 1A, 1B angeordnet sind, an demselben horizontalen Erstreckungsende der Optikanordnung 10 angeordnet. Eine Optikanordnung gemäß Figur 7 kann für den Einsatz in Leuchten besonders vorteilhaft sein, da dann das Vorsehen von Lichtquellen 4A, 4B an nur einer Seite der Optikanordnung 10 zu erfolgen hat und entsprechend eine elektrische Kontaktierung der Lichtquellen 4A, 4B vereinfacht ist. Im Ergebnis führt auch die Optikanordnung 10 gemäß Figur 7 dazu, dass Licht sowohl vertikal nach oben als auch vertikal nach unten über eine große Abstrahlfläche verteilt homogen abgestrahlt wird.

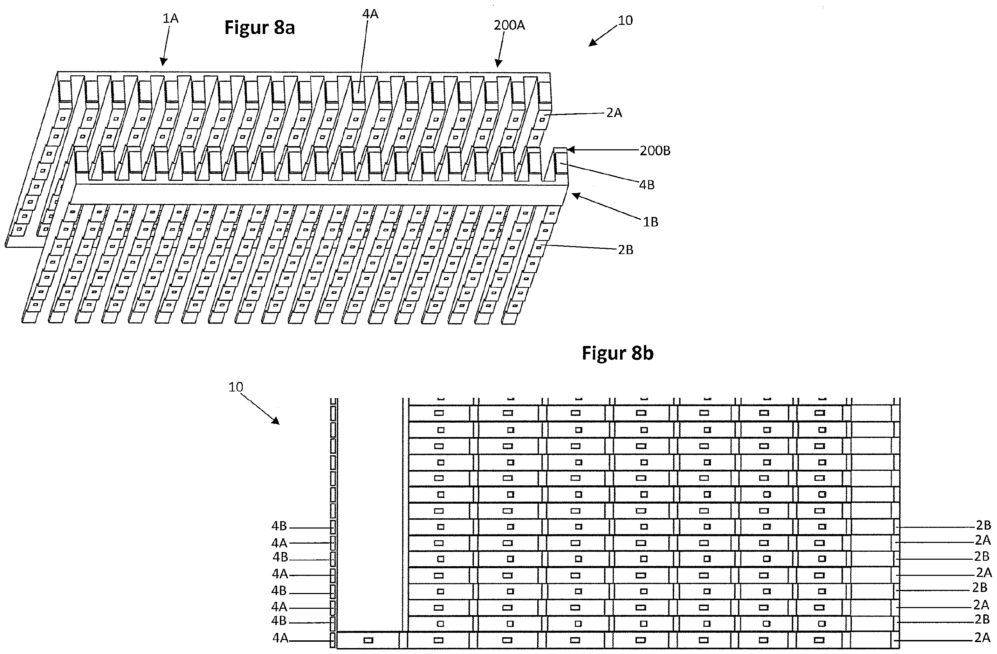

In Figur 8 umfassend die Figuren 8a und 8b ist eine weitere Ausführungsform einer erfindungsgemäßen Optikanordnung 10 in Prinzipdarstellungen dargestellt. Elemente dieser Ausführungsform, die ähnlich zu Elementen der bereits beschriebenen erfindungsgemäßen Ausführungsform sind, sind mit identischen Bezugszeichen gekennzeichnet. Die Optikanordnung 10 gemäß Figur 8 weist zwei Optikelemente 1A, 1B auf. Die Optikelemente 1A, 1B weisen eine jeweils unterschiedliche geometrische Form auf, weshalb diese beiden Optikelemente 1A, 1B jeweils eine unterschiedliche Lichtverteilung bereitstellen. In der Optikanordnung 10 gemäß Figur 8 (der Betriebszustand der Optikanordnung ist in Figur 8b dargestellt) weisen die Oberflächennormalen der Lichtauskoppelabschnitte 200A, 200B der beiden Optikelemente 1A, 1B in dieselbe Richtung. An dem Lichteinkoppelabschnitt 100A des ersten Optikelements 1A sind erste Lichtquellen 4A angeordnet. An dem Lichteinkoppelabschnitt 100B des zweiten Optikelements 1B sind zweite Lichtquellen 4B angeordnet. Jede der Lichtquellen 4A, 4B ist genau einem der Lichtleitabschnitte 2A, 2B zugeordnet. Dabei sind die ersten Lichtquellen 4A, die an dem ersten Lichteinkoppelabschnitt 100A des ersten Optikelements 1A angeordnet sind, unabhängig von den zweiten Lichtquellen 4B, die an dem Lichteinkoppelabschnitt 100B des zweiten Optikelements 1B angeordnet sind, ansteuerbar. Da die beiden Optikelemente 1A, 1B jeweils eine unterschiedliche Lichtverteilung bereitstellen, kann durch gezielte Ansteuerung von entweder den ersten Lichtquellen 4A oder den zweiten Lichtquellen 4B die Lichtverteilungskurve, die durch die Optikanordnung bereitgestellt wird, gezielt ausgewählt werden.

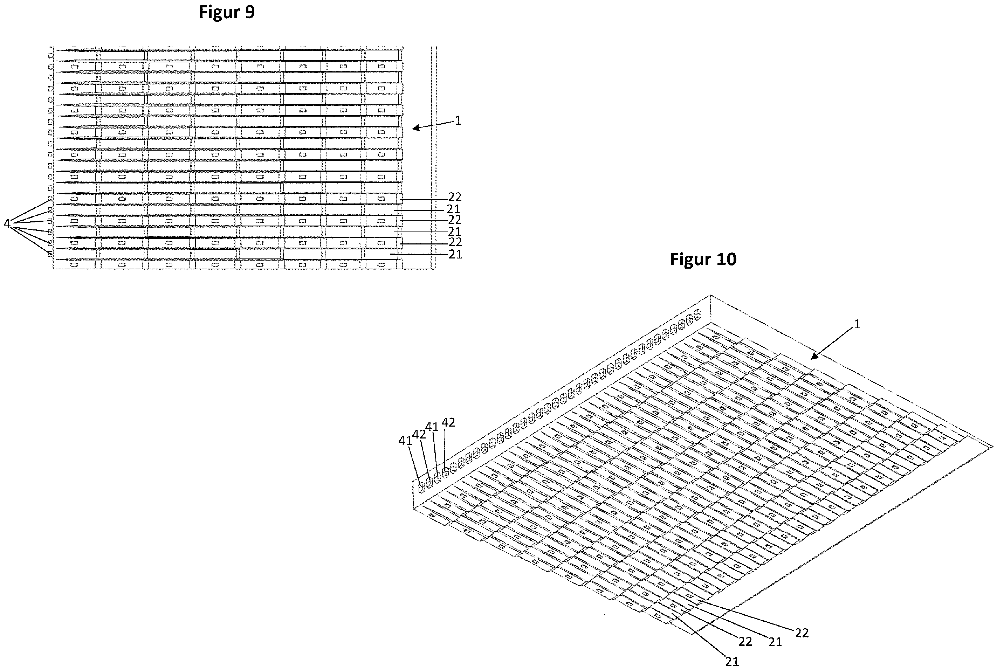

In Figur 9 ist in einer Prinzipdarstellung ein Ausschnitt einer Ausführungsform einer erfindungsgemäßen Leuchte dargestellt. Elemente dieser Ausführungsform, die ähnlich zu Elementen der bereits beschriebenen erfindungsgemäßen Ausführungsformen sind, sind mit identischen Bezugszeichen gekennzeichnet. Die beschriebene Ausführungsform weist ein Optikelement 1 auf. Bei der beschriebenen Ausführungsform weist das Optikelement 1, was unabhängig von der beschriebenen Ausführungsform erfindungsgemäß allgemein vorteilhaft ist, zwei verschiedene Gruppen an Lichtleitabschnitten auf, nämlich eine erste Gruppe an ersten Lichtleitabschnitten 21 und eine zweite Gruppe an zweiten Lichtleitabschnitten 22. Allgemein bevorzugt und in der beschriebenen Ausführungsform vorgesehen, sind die ersten und zweiten Lichtleitabschnitte 21, 22 alternierend angeordnet. Ferner allgemein bevorzugt, und in der beschriebenen Ausführungsform vorgesehen, stellen die ersten Lichtleitabschnitte 21 eine andere Lichtverteilung bereit als die zweiten Lichtleitabschnitte 22. Jedem der Lichtleitabschnitte 21, 22 ist jeweils eine Lichtquelle 4 zugeordnet. Die Lichtquellen 4 sind in zwei Gruppen aufgeteilt, die voneinander unabhängig ansteuerbar sind. Eine erste Gruppe der Lichtquellen 4 ist den ersten Lichtleitabschnitten 21 zugeordnet, eine zweite Gruppe der Lichtquellen 4 ist den zweiten Lichtleitabschnitten 22 zugeordnet. Da die beiden Gruppen unabhängig voneinander ansteuerbar sind, kann durch Auswahl der Ansteuerung der ersten oder der zweiten Gruppe an Lichtquellen 4 die von der Leuchte abgestrahlte Lichtverteilungskurve gezielt gewählt werden, da bei Ansteuern der ersten Gruppe an Lichtquellen 4 die durch die ersten Lichtleitabschnitte 21 bestimmte Lichtverteilung mit der sich daraus resultierenden Lichtverteilungskurve genutzt wird und bei Ansteuern der zweiten Gruppe an Lichtquellen 4 die durch die zweiten Lichtleitabschnitte 22 bereitgestellte Lichtverteilung und somit abgestrahlte Lichtverteilungskurve genutzt wird.

In Figur 10 ist eine weitere Ausführungsform einer erfindungsgemäßen Leuchte in einem Ausschnitt in einer Prinzipdarstellung dargestellt. Elemente dieser Ausführungsform, die ähnlich zu Elementen der bereits beschriebenen erfindungsgemäßen Ausführungsform sind, sind mit identischen Bezugszeichen gekennzeichnet. Die Leuchte umfasst ein Optikelement 1. Wie zu dem Ausführungsbeispiel gemäß Figur 9 erläutert weist dieses Optikelement 1 eine erste Gruppe an ersten Lichtleitabschnitten 21 und eine zweite Gruppe an zweiten Lichtleitabschnitten 22 auf, wobei die ersten Lichtleitabschnitte 21 eine andere Lichtverteilung bereitstellen als die zweiten Lichtleitabschnitte 22. Jedem der Lichtleitabschnitte 21, 22 ist eine LED-Einheit 41, 42 zugeordnet. Jede LED-Einheit 41, 42 weist zwei LEDs mit unterschiedlicher Lichtfarbe auf, die voneinander unabhängig angesteuert werden können. Bei der Ausführungsform gemäß Figur 10 ist somit zum einen eine erste Gruppe an LED-Einheiten 41 unabhängig von einer zweiten Gruppe an LED-Einheiten 42 ansteuerbar, wobei darüber hinaus die Lichtquellen unterschiedlicher Lichtfarben, die einer der Gruppen an LED-Einheiten 41, 42 zugeordnet sind, unabhängig voneinander ansteuerbar sind. Entsprechend kann bei der erfindungsgemäßen Ausführungsform gemäß Figur 10 sowohl die von der Leuchte abgestrahlte Lichtfarbe als auch die von der Leuchte abgestrahlte Lichtverteilungskurve eingestellt werden.

### Bezugszeichenliste

- 1: Optikelement
- 1A: erstes Optikelement
- 1B: zweites Optikelement
- 2: Lichtleitabschnitt
- 2A: erster Lichtleitabschnitt des ersten Optikelements
- 2B: zweiter Lichtleitabschnitt des zweiten Optikelements
- 3: Freiraum
- 4: Lichtquelle
- 4A: erste Lichtquelle
- 4B: zweite Lichtquelle
- 10: Optikanordnung
- 11: erster Körperabschnitt
- 12: zweiter Körperabschnitt
- 12A: zweiter Körperabschnitt des ersten Optikelements
- 12B: zweiter Körperabschnitt des zweiten Optikelements
- 21: erster Lichtleitabschnitt
- 22: zweiter Lichtleitabschnitt
- 40: Lichtstrahl
- 41: erste Gruppe von LED-Einheiten
- 42: zweite Gruppe von LED-Einheiten
- 100: Lichteinkoppelabschnitt
- 100A: erster Lichteinkoppelabschnitt des ersten Optikelements
- 100B: zweiter Lichteinkoppelabschnitt des zweiten Optikelements
- 101: Ausnehmung
- 101A: erste Ausnehmung des ersten Optikelements
- 101B: zweite Ausnehmung des zweiten Optikelements
- 200: Lichtauskoppelabschnitt
- 200A: erster Lichtauskoppelabschnitt des ersten Optikelements
- 200B: zweiter Lichtkoppelabschnitt des zweiten Optikelements
- L: laterale Richtung
- V: Vertikale

## Patentansprüche

1. Optikelement (1, 1A, 1B) zur Lichtlenkung in einer Leuchte, das Optikelement umfassend einen Linsenkörper, dessen Oberfläche einen Lichteinkoppelabschnitt (100, 100A, 100B) zum Einkoppeln eines Lichtstrahls (40) in den Linsenkörper und einen Lichtauskoppelabschnitt (200, 200A, 200B) zum Auskoppeln des Lichtstrahls (40) aus dem Linsenkörper ausbildet, wobei
der Linsenkörper mehrere Lichtleitabschnitte (2, 2A, 2B) aufweist, die miteinander lichtleitend verbunden sind und die über eine horizontale Schnittebene verteilt angeordnet sind, wobei jeder Lichtleitabschnitt (2, 2A, 2B) in der horizontalen Schnittebene einen durchgehenden Verlauf zwischen seinen beiden Längsenden aufweist und lateral zu seinem Verlauf durch zwei gegenüberliegende laterale Erstreckungsenden begrenzt ist, wobei jeder Lichtleitabschnitt (2, 2A, 2B) von seinen in der horizontalen Schnittebene lateral benachbarten Lichtleitabschnitten (2, 2A, 2B) lateral beabstandet ist, so dass die Lichtleitabschnitte (2, 2A, 2B) voneinander beabstandete Abschnitte des Linsenkörpers darstellen und jeweils zwischen zwei lateral benachbarten Lichtleitabschnitten (2, 2A, 2B) ein Freiraum angeordnet ist und jeder Lichtleitabschnitt (2, 2A, 2B) zum Führen des Lichtstrahls entlang seines durchgehenden Verlaufs zwischen seinen lateralen Erstreckungsenden ausgebildet ist, wobei zumindest eine Mehrzahl der Lichtleitabschnitte (2, 2A, 2B) eine vertikale Erstreckungslänge aufweist, die sich mit zunehmendem horizontalen Abstand von dem Lichteinkoppelabschnitt (100) verringert, und wobei sich jeder Lichtleitabschnitt (2, 2A, 2B) über einen vertikalen Abschnitt des Linsenkörpers erstreckt, der mindestens 30 % der gesamten vertikalen Erstreckungslänge des Linsenkörpers innerhalb des horizontalen Bereichs darstellt, über den sich der jeweilige Lichtleitabschnitt (2, 2A, 2B) erstreckt, wobei jeder Lichtleitabschnitt (2, 2A, 2B) über diesen vertikalen Abschnitt des Linsenkörpers hinweg von seinen lateral benachbarten Lichtleitabschnitten (2, 2A, 2B) lateral beabstandet ist, wobei insbesondere die Mehrzahl der Lichtleitabschnitte (2, 2A, 2B) über einen ersten Körperabschnitt (11, 11A) des Linsenkörpers lichtleitend miteinander verbunden sind, der zumindest einen Abschnitt des Lichteinkoppelabschnitts (100, 100A, 100B) bildet und der ausgehend von einem vertikalen Ende eines jeden dieser Lichtleitabschnitte (2, 2A, 2B) als vertikale Verlängerung des jeweiligen Lichtleitabschnitts (2, 2A, 2B) ununterbrochen bis hin zum Lichteinkoppelabschnitt verläuft,
wobei
die Mehrzahl der Lichtleitabschnitte (2, 2A, 2B) über einen zweiten Körperabschnitt (12, 12A) des Linsenkörpers lichtleitend miteinander verbunden sind, der zumindest einen Abschnitt des Lichtauskoppelabschnitts (200, 200A, 200B) bildet, wobei der zweite Körperabschnitt (12, 12A) an einem zweiten vertikalen Ende eines jeden dieser Lichtleitabschnitte (2, 2A, 2B) angeordnet und als vertikal verlaufende Verlängerung eines jeden der Lichtleitabschnitte (2, 2A, 2B) ausgebildet ist, wobei er von diesem zweiten vertikalen Ende ununterbrochen bis zum Lichtauskoppelabschnitt (200, 200A, 200B) verläuft,
und wobei
i) der Lichteinkoppelabschnitt (100, 100A, 100B) durch ein horizontales Erstreckungsende des Linsenkörpers ausgebildet ist, wobei sich die Lichtleitabschnitte (2, 2A, 2B) mit ihrem jeweiligen Verlauf horizontal von dem Lichteinkoppelabschnitt (100, 100A, 100B) weg erstrecken,
oder
ii) der Lichteinkoppelabschnitt (100, 100A, 100B) horizontal innerhalb der Erstreckung des Linsenkörpers angeordnet ist und die Lichtleitabschnitte (2, 2A, 2B) horizontal um den Lichteinkoppelabschnitt (100, 100A, 100B) angeordnet sind und sich mit ihrem jeweiligen Verlauf horizontal von dem Lichteinkoppelabschnitt (100, 100A, 100B) weg erstrecken.

2. Optikelement (1, 1A, 1B) nach Anspruch 1,
**dadurch gekennzeichnet, dass**
zumindest eine Mehrzahl der Lichtleitabschnitte (2, 2A, 2B) über einen ersten Körperabschnitt (11) des Linsenkörpers lichtleitend miteinander verbunden sind, der zumindest einen Abschnitt des Lichteinkoppelabschnitts (100, 100A, 100B) bildet, und/oder über einen zweiten Körperabschnitt (12, 12A, 12B) des Linsenkörpers lichtleitend miteinander verbunden sind, der zumindest einen Abschnitt des Lichtauskoppelabschnitts (200, 200A, 200B) bildet.

3. Optikelement (1, 1A, 1B) nach einem der vorangehenden Ansprüche,
**dadurch gekennzeichnet, dass**
zumindest eine Mehrzahl der Lichtleitabschnitte (2, 2A, 2B) an einem ersten ihrer Längsenden lichtleitend miteinander verbunden sind.

4. Optikelement (1, 1A, 1B) nach einem der vorangehenden Ansprüche,
**dadurch gekennzeichnet, dass**
sich zumindest eine Mehrzahl der Lichtleitabschnitte (2, 2A, 2B) über zumindest 50 %, insbesondere zumindest 70 % einer vertikalen Erstreckungslänge des Linsenkörpers erstrecken und über ihre gesamte vertikale Erstreckungslänge hinweg voneinander lateral beabstandet sind,
und/oder dass
zumindest über 50 % der vertikalen Erstreckungslänge des Linsenkörpers hinweg in jeder horizontalen Schnittebene mindestens 50 % der flächigen Erstreckung des Linsenkörpers durch eine Mehrzahl der Lichtleitabschnitte (2, 2A, 2B) ausgebildet ist.

5. Optikelement (1, 1A, 1B) nach einem der vorangehenden Ansprüche,
**dadurch gekennzeichnet, dass**
der Lichteinkoppelabschnitt (100, 100A, 100B) in einer horizontalen Richtung zwischen sich in dieser horizontalen Richtung gegenüberliegenden Lichtleitabschnitten (2A, 2B) angeordnet ist und diese Lichtleitabschnitte (2, 2A, 2B) miteinander verbindet und/oder die Lichtleitabschnitte (2, 2A, 2B) eine sternförmige Anordnung um den Lichteinkoppelabschnitt (100, 100A, 100B) bilden und über den Lichteinkoppelabschnitt (100, 100A, 100B) miteinander verbunden sind.

6. Optikelement (1, 1A, 1B) nach einem der vorangehenden Ansprüche,
**dadurch gekennzeichnet, dass**
die Lichtleitabschnitte (2, 2A, 2B) zumindest ein vertikales Ende des Linsenkörpers ausbilden.

7. Optikelement (1, 1A, 1B) nach einem der vorangehenden Ansprüche,
**dadurch gekennzeichnet, dass**
lateral zwischen zwei benachbarten Lichtleitabschnitten (2, 2A, 2B) ein Zwischenraum vorgesehen ist, der in der horizontalen Schnittebene einen V-förmigen Querschnitt aufweist, wobei insbesondere die Spitze des V zum Lichteinkoppelabschnitt (100, 100A, 100B) weist.

8. Optikelement (1, 1A, 1B) nach einem der vorangehenden Ansprüche,
**dadurch gekennzeichnet, dass**
der Lichtauskoppelabschnitt (200, 200A, 200B) entlang einer horizontalen Ebene verläuft.

9. Optikanordnung (10) umfassend zumindest zwei Optikelemente (1, 1A, 1B) nach einem der vorangehenden Ansprüche,
**dadurch gekennzeichnet, dass**
zumindest einige, insbesondere eine Mehrheit der Lichtleitabschnitte (2A) eines ersten Optikelements (1A) horizontal zwischen Lichtleitabschnitten (2B) eines zweiten Optikelements (1B) und mit diesen Lichtleitabschnitten (2B) des zweiten Optikelements (1B) vertikal überlappend angeordnet sind, wobei insbesondere eine Oberflächennormale des Lichtauskoppelabschnitts (200A) des ersten Optikelements (1A) und eine Oberflächennormale des Lichtauskoppelabschnitts (200B) des zweiten Optikelements (1B) in dieselbe oder in zueinander entgegengesetzte Richtungen weisen, wobei insbesondere die Oberflächennormale des Lichtauskoppelabschnitts (200A) des ersten Optikelements (1A) vertikal nach oben weist und die Oberflächennormale des Lichtauskoppelabschnitts (200B) des zweiten Optikelements (1B) vertikal nach unten weist.

10. Optikanordnung (10) nach Anspruch 9,
**dadurch gekennzeichnet, dass**
an dem Lichteinkoppelabschnitt (100A) des ersten Optikelements (1A) LEDs mit einer ersten Lichtfarbe angeordnet sind und an dem Lichteinkoppelabschnitt (100B) des zweiten Optikelements (1B) LEDs mit einer zweiten Lichtfarbe angeordnet, wobei sich die erste Lichtfarbe von der zweiten Lichtfarbe unterscheidet, wobei insbesondere jedem der zumindest einigen Lichtleitabschnitte (2A) oder jeweils einer Gruppe von Lichtleitabschnitten (2A) des ersten Optikelements (1A) jeweils genau eine oder genau eine Gruppe der LEDs mit der ersten Lichtfarbe zugeordnet ist und jedem der zumindest einigen Lichtleitabschnitte (2B) oder jeweils einer Gruppe von Lichtleitabschnitten (2B) des zweiten Optikelements (1B) jeweils genau eine oder genau eine Gruppe der LEDs mit der zweiten Lichtfarbe zugeordnet ist.

11. Optikanordnung nach einem der Ansprüche 9 oder 10,
**dadurch gekennzeichnet, dass**
dem ersten Optikelement (1A) eine erste Lichtverteilungskurve und dem zweiten Optikelement (1B) eine zweite Lichtverteilungskurve zugeordnet ist, wobei sich die beiden Lichtverteilungskurven voneinander unterscheiden.

12. Leuchte umfassend ein Optikelement (1, 1A, 1B) nach einem der Ansprüche 1 bis 9 und insbesondere eine Optikanordnung (10) nach einem der Ansprüche 9 bis 11, wobei die Leuchte eine Lichtquelle, insbesondere umfassend eine oder mehrere LEDs, sowie eine Steuereinheit zum Ansteuern der Lichtquelle umfasst, wobei insbesondere zumindest bei einer Mehrheit der Lichtleitabschnitte (2, 2A, 2B) jedem der Lichtleitabschnitte (2, 2A, 2B) oder jeweils einer Gruppe von Lichtleitabschnitten (2A, 2B) jeweils genau eine LED-Einheit zugeordnet ist, die an dem Lichteinkoppelabschnitt (100, 100A, 100B) angeordnet ist, wobei insbesondere die Steuereinheit dazu ausgebildet ist, eine erste Gruppe an LED-Einheiten unabhängig von einer zweiten Gruppe an LED-Einheiten anzusteuern.

13. Leuchte nach Anspruch 12 umfassend eine Optikanordnung (10) nach Anspruch 11,
**dadurch gekennzeichnet, dass**
die Oberflächennormalen der Lichtauskoppelabschnitte (200A, 200B) der beiden Optikelemente (1A, 1B) der Optikanordnung (10) in dieselbe Richtung weisen und dass an dem Lichteinkoppelabschnitt (100A) des ersten Optikelements eine erste der Gruppen an LED-Einheiten und an dem Lichteinkoppelabschnitt (100B) des zweiten Optikelements (100B) eine zweite der Gruppen an LED-Einheiten angeordnet ist, wobei die Steuereinheit dazu ausgebildet ist, die beiden Gruppen unabhängig voneinander anzusteuern zum Gewährleisten einer Wählbarkeit einer durch die Optikanordnung (10) bei einem Betrieb der Leuchte abgestrahlten Lichtverteilung.

14. Leuchte nach einem der Ansprüche 12 oder 13,
**dadurch gekennzeichnet, dass**
die LED-Einheiten der ersten Gruppe an LED-Einheiten jeweils an Lichtleitabschnitten (2, 2A, 2B) angeordnet sind, die eine erste Lichtverteilung bereitstellen, und dass die LED-Einheiten der zweiten Gruppe an LED-Einheiten jeweils an Lichtleitabschnitten (2, 2A, 2B) angeordnet sind, die eine zweite Lichtverteilung bereitstellen,
und/oder dass
die erste Gruppe an LED-Einheiten ausschließlich LEDs mit einer ersten Lichtfarbe aufweist und die zweite Gruppe an LED-Einheiten ausschließlich LEDs mit einer zweiten, von der ersten unterschiedlichen Lichtfarbe aufweist, oder dass die LED-Einheiten jeweils LEDs mit einer ersten und LEDs mit einer zweiten Lichtfarbe aufweisen, wobei die LEDs mit der ersten Lichtfarbe, die einer bestimmten der Gruppen an LED-Einheiten angehören, durch die Steuereinheit unabhängig von den LEDs mit einer zweiten Lichtfarbe, die dieser bestimmten Gruppe angehören, ansteuerbar sind.

## Claims

1. Optical element (1, 1A, 1B) for light guidance in a luminaire, the optical element comprising a lens body the surface of which forms a light coupling section (100, 100A, 100B) for coupling a light beam (40) into the lens body and a light outcoupling section (200, 200A, 200B) for coupling out the light beam (40) from the lens body, wherein
the lens body has several light guide sections (2, 2A, 2B) which are connected to each other in a light-guiding manner and which are distributed over a horizontal sectional plane, each light guide section (2, 2A, 2B) having a continuous course between its two longitudinal ends in the horizontal sectional plane and being bounded laterally to its course by two opposite lateral extension ends, each light guide section (2, 2A, 2B) being laterally spaced from its light-guiding sections (2, 2A, 2B) which are laterally adjacent in the horizontal sectional plane, so that the light-guiding sections (2, 2A, 2B) represent mutually spaced-apart sections of the lens body and a free space is arranged in each case between two laterally adjacent light-guiding sections (2, 2A, 2B) and each light guide section (2, 2A, 2B) is configured for guiding the light beam along its continuous course between its lateral extension ends, at least a plurality of the light-guiding sections (2, 2A, 2B) having a vertical extension length that decreases with increasing horizontal distance from the light coupling section (100) and each light guide section (2, 2A, 2B) extending over a vertical section of the lens body which represents at least 30% of the entire vertical extension length of the lens body within the horizontal range over which the respective light guide section (2, 2A, 2B) extends, each light guide section (2, 2A, 2B) being laterally spaced from its laterally adjacent light-guiding sections (2, 2A, 2B) across this vertical section of the lens body, in particular the plurality of the light-guiding sections (2, 2A, 2B) being connected to each other in a light-guiding manner through a first body section (11, 11A) of the lens body which forms at least one portion of the light coupling section (100, 100A, 100B) and which, starting from a vertical end of each of these light-guiding sections (2, 2A, 2B), extends as a vertical extension of the respective light guide section (2, 2A, 2B) uninterruptedly up to the light coupling section,
wherein
the plurality of light-guiding sections (2, 2A, 2B) are connected to each other in a light-guiding manner through a second body section (12, 12A) of the lens body which forms at least one portion of the light outcoupling section (200, 200A, 200B), the second body section (12, 12A) being arranged on a second vertical end of each of these light-guiding sections (2, 2A, 2B) and formed as a vertical extension of each of the light-guiding sections (2, 2A, 2B) and extending uninterruptedly from that second vertical end up to the light outcoupling section (200, 200A, 200B),
and wherein
i) the light coupling section (100, 100A, 100B) is formed by a horizontal extension end of the lens body, with the light-guiding sections (2, 2A, 2B) extending with their respective course horizontally away from the light coupling section (100, 100A, 100B),
or
ii) the light coupling section (100, 100A, 100B) is horizontally arranged within the extension of the lens body and the light-guiding sections (2, 2A, 2B) are horizontally arranged about the light coupling section (100, 100A, 100B) and extend with their respective course horizontally away from the light coupling section (100, 100A, 100B).

2. Optical element (1, 1A, 1B) according to claim 1,
**characterized in that**
at least a plurality of the light-guiding sections (2, 2A, 2B) are connected to each other in a light-guiding manner through a first body section (11) of the lens body which forms at least one portion of the light coupling section (100, 100A, 100B) and/or are connected to each other in a light-guiding manner through a second body section (12, 12A, 12B of the lens body which forms at least one portion of the light outcoupling section (200, 200A, 200B).

3. Optical element (1, 1A, 1B) according to any one of the preceding claims,
**characterized in that**
at least a plurality of the light-guiding sections (2, 2A, 2B) are connected to each other in a light-guiding manner at a first of their longitudinal ends.

4. Optical element (1, 1A, 1B) according to any one of the preceding claims,
**characterized in that**
at least a plurality of the light-guiding sections (2, 2A, 2B) extends over at least 50%, in particular at least over 70%, of a vertical extension length of the lens body and are laterally spaced from each other over their entire extension length
and/or **in that**
at least over 50% of the vertical extension length of the lens body in each horizontal sectional plane at least 50% of the flat extension of the lens body are formed by a plurality of the light-guiding sections (2, 2A, 2B).

5. Optical element (1, 1A, 1B) according to any one of the preceding claims,
**characterized in that**
the light coupling section (100, 100A, 100B) is arranged in a horizontal direction between light-guiding sections (2A, 2B) opposing each other **in that** horizontal direction and connects these light-guiding sections (2, 2A, 2B) to each other and/or that the light-guiding sections (2, 2A, 2B) form a star-shaped arrangement around the light coupling section (100, 100A, 100B) and are connected to each other through the light coupling section (100, 100A, 100B).

6. Optical element (1, 1A, 1B) according to any one of the preceding claims,
**characterized in that**
the light-guiding sections (2, 2A, 2B) form at least a vertical end of the lens body.

7. Optical element (1, 1A, 1B) according to any one of the preceding claims,
**characterized in that**
an intermediate space is provided laterally between two adjacent light-guiding sections (2, 2A, 2B), which has a V-shaped cross section in the horizontal sectional plane, wherein in particular the tip of the V points to the light coupling section (100, 100A, 100B).

8. Optical element (1, 1A, 1B) according to any one of the preceding claims,
**characterized in that**
the light outcoupling section (200, 200A, 200B) extends along a horizontal plane.

9. Optical arrangement (10) comprising at least two optical elements (1, 1A, 1B) according to any one of the preceding claims,
**characterized in that**
at least some, in particular a plurality, of the light-guiding sections (2A) of a first optical element (1A) are horizontally arranged between light-guiding sections (2B) of a second optical element (1B) and vertically overlapping with these light-guiding sections (2B) of the second optical element (1B), wherein in particular a surface normal of the light outcoupling section (200A) of the first optical element (1A) and a surface normal of the light outcoupling section (200B) of the second optical element (1B) point in the same or mutually opposite directions, wherein in particular the surface normal of the light outcoupling section (200A) of the first optical element (1A) points upwards vertically and the surface normal of the light outcoupling section (200B) of the second optical element (1B) points downwards vertically.

10. Optical arrangement (10) according to claim 9,
**characterized in that**
LEDs with a first light color are arranged at the light coupling section (100A) of the first optical element (1A) and LEDs with a second light color are arranged at the light coupling section (100B) of the second optical element (1B), wherein the first light color differs from the second light color, wherein in particular precisely one or precisely one group of the LEDs with the first light color is respectively assigned to each of the at least some light-guiding sections (2A) or to a group of light-guiding sections (2A) of the first optical element (1A) and precisely one precisely one group of LEDs with the second light color is respectively assigned to each of the at least some light-guiding sections (2B) or to a group of light-guiding sections (2B) of the second optical element (1B).

11. Optical arrangement according to any one of claims 9 or 10,
**characterized in that**
the first optical element (1A) is assigned a first light distribution curve and the second optical element (1B) is assigned a second light distribution curve, wherein both light distribution curves are different from each other.

12. Luminaire comprising an optical element (1, 1A, 1B) according to any one of claims 1 to 9 and in particular an optical arrangement (10) according to any one of claims 9 to 11, wherein the luminaire comprises a light source, which comprises in particular one or several LEDs, as well as a control unit for controlling the light source, wherein in particular in a majority of the light-guiding sections (2, 2A, 2B) precisely one LED unit which is arranged at the light coupling section (100, 100A, 100B) is assigned to each of the light-guiding sections (2, 2A, 2B) or group of light-guiding sections (2A, 2B), the control unit being configured in particular for controlling a first group of LED units independently of a second group of LED units.

13. Luminaire according to claim 12, comprising an optical arrangement (10) according to claim 11,
**characterized in that**
the surface normals of the light outcoupling sections (200A, 200B) of the two optical elements (1A, 1B) of the optical arrangement (10) point in the same direction and that at the light coupling section (100A) of the first optical element a first one of the groups of LED units and at the light coupling section (100B) of the second optical element (100B) a second one of the groups of LED units is arranged, wherein the control unit is configured for controlling both groups independently of each other in order to ensure selectability of a light distribution radiated by the optical arrangement (10) when operating the luminaire.

14. Luminaire according to any one of claims 12 or 13,
**characterized in that**
the LED units of the first group of LED units are each arranged at light-guiding sections (2, 2A, 2B) which provide a first light distribution and **in that** the LED units of the second group of LED units are each arranged at light-guiding sections (2, 2A, 2B) which provide a second light distribution
and/or **in that**
the first group of LED units exclusively includes LEDs with a first light color and the second group of LED units exclusively includes LEDs with a second light color different from the first light color or that the LED units respectively include LEDs with a first and LEDs with a second light color, wherein the LEDs with the first light color, which belong to a particular group of LED units, are controllable by the control unit independently of the LEDs with the second light color which belong to that particular group.

## Revendications

1. Élément optique (1, 1A, 1B) pour le guidage de la lumière dans un luminaire, l'élément optique comprenant un corps de lentille dont la surface forme une section de couplage de lumière (100, 100A, 100B) pour coupler un faisceau lumineux (40) dans le corps de lentille et une section de découplage de lumière (200, 200A, 200B) pour découpler le faisceau lumineux (40) du corps de lentille, dans lequel
le corps de lentille comporte plusieurs sections de guidage de lumière (2, 2A, 2B) qui sont reliées les unes aux autres de manière à guider la lumière et qui sont réparties sur un plan de coupe horizontal, chaque section de guidage de lumière (2, 2A, 2B) ayant un tracé continu entre ses deux extrémités longitudinales dans le plan de coupe horizontal et étant limitée latéralement par rapport à son tracé par deux extrémités d'extension latérales opposées, chaque section de guidage de lumière (2, 2A, 2B) étant espacée latéralement de ses sections de guidage de lumière (2, 2A, 2B) qui sont latéralement adjacentes dans le plan de coupe horizontal, de sorte que les sections de guidage de lumière (2, 2A, 2B) représentent des sections mutuellement espacées du corps de lentille et qu'un espace libre est disposé dans chaque cas entre deux sections de guidage de lumière latéralement adjacentes (2, 2A, 2B) et que chaque section de guidage de lumière (2, 2A, 2B) est configurée pour guider le faisceau lumineux le long de son tracé continu entre ses extrémités d'extension latérales, au moins une pluralité de sections de guidage de lumière (2, 2A, 2B) ayant une longueur d'extension verticale qui diminue avec l'augmentation de la distance horizontale par rapport à la section de couplage de lumière (100) et chaque section de guidage de lumière (2, 2A, 2B) s'étendant sur une section verticale du corps de lentille qui représente au moins 30 % de la longueur d'extension verticale totale du corps de lentille dans la plage horizontale sur laquelle la section de guidage de lumière respective (2, 2A, 2B) s'étend, chaque section de guidage de lumière (2, 2A, 2B) étant latéralement espacée de ses sections de guidage de lumière latéralement adjacentes (2, 2A, 2B) à travers cette section verticale du corps de lentille, en particulier la pluralité des sections de guidage de lumière (2, 2A, 2B) étant reliées les unes aux autres de manière à guider la lumière à travers une première section (11, 11A) du corps de la lentille qui forme au moins une partie de la section de couplage de lumière (100, 100A, 100B) et qui, à partir d'une extrémité verticale de chacune de ces sections de guidage de lumière (2, 2A, 2B), s'étend comme une extension verticale de la section de guidage de lumière respective (2, 2A, 2B) de manière ininterrompue jusqu'à la section de couplage de la lumière,
dans lequel
la pluralité de sections de guidage de lumière (2, 2A, 2B) sont reliées les unes aux autres de manière à guider la lumière au moyen d'une deuxième section (12, 12A) du corps de la lentille qui forme au moins une partie de la section de découplage de la lumière (200, 200A, 200B), la deuxième section (12, 12A) étant disposée sur une deuxième extrémité verticale de chacune de ces sections de guidage de lumière (2, 2A, 2B) et formée comme une extension verticale de chacune des sections de guidage de lumière (2, 2A, 2B) et s'étendant de manière ininterrompue à partir de cette deuxième extrémité verticale jusqu'à la section de découplage de lumière (200, 200A, 200B),
et dans lequel
i) la section de couplage de lumière (100, 100A, 100B) est formée par une extrémité d'extension horizontale du corps de lentille, les sections de guidage de lumière (2, 2A, 2B) s'étendant avec leur tracé respectif horizontalement loin de la section de couplage de lumière (100, 100A, 100B),
ou
ii) la section de couplage de lumière (100, 100A, 100B) est disposée horizontalement dans l'extension du corps de lentille et les sections de guidage de lumière (2, 2A, 2B) sont disposées horizontalement autour de la section de couplage de lumière (100, 100A, 100B) et s'étendent avec leur tracé respectif horizontalement loin de la section de couplage de lumière (100, 100A, 100B).

2. Élément optique (1, 1A, 1B) selon la revendication 1,
**caractérisé en ce que**
au moins plusieurs des sections de guidage de lumière (2, 2A, 2B) sont reliées entre elles de manière à guider la lumière à travers une première section de corps (11) de la lentille, première section de corps qui forme au moins une partie de la section de couplage de lumière (100, 100A, 100B) et/ou sont reliées entre elles de manière à guider la lumière à travers une deuxième section de corps (12, 12A, 12B) de la lentille, deuxième section de corps qui forme au moins une partie de la section de découplage de lumière (200, 200A, 200B).

3. Élément optique (1, 1A, 1B) selon l'une quelconque des revendications précédentes,
**caractérisé en ce que**
au moins plusieurs des sections de guidage de lumière (2, 2A, 2B) sont reliées entre elles à une première de leurs extrémités longitudinales de manière à guider la lumière.

4. Elément optique (1, 1A, 1B) selon l'une quelconque des revendications précédentes,
**caractérisé en ce que**
au moins plusieurs de sections de guidage de lumière (2, 2A, 2B) s'étendent sur au moins 50%, en particulier au moins plus de 70%, d'une longueur d'extension verticale du corps de lentille et sont espacées latéralement les unes des autres sur toute leur longueur d'extension
et/ou **en ce que**
au moins plus de 50 % de la longueur d'extension verticale du corps de lentille dans chaque plan de coupe horizontal au moins 50 % de l'extension plane du corps de lentille sont formés par une pluralité de sections de guidage de la lumière (2, 2A, 2B).

5. Elément optique (1, 1A, 1B) selon l'une quelconque des revendications précédentes,
**caractérisé en ce que**
la section de couplage de lumière (100, 100A, 100B) est disposée dans une direction horizontale entre des sections de guidage de lumière (2A, 2B) opposées l'une à l'autre dans cette direction horizontale et relie ces sections de guidage de lumière (2, 2A, 2B) l'une à l'autre et/ou que les sections de guidage de lumière (2, 2A, 2B) forment une disposition en étoile autour de la section de couplage de lumière (100, 100A, 100B) et sont reliées l'une à l'autre par l'intermédiaire de la section de couplage de lumière (100, 100A, 100B).

6. Élément optique (1, 1A, 1B) selon l'une quelconque des revendications précédentes,
**caractérisé en ce que**
les sections de guidage de lumière (2, 2A, 2B) forment au moins une extrémité verticale du corps de la lentille.

7. Elément optique (1, 1A, 1B) selon l'une quelconque des revendications précédentes,
**caractérisé en ce que**
un espace intermédiaire est prévu latéralement entre deux sections de guidage de lumière (2, 2A, 2B) adjacentes qui présente une section transversale en forme de V dans le plan de coupe horizontal, la pointe du V étant notamment orientée vers la section de couplage de lumière (100, 100A, 100B).

8. Élément optique (1, 1A, 1B) selon l'une quelconque des revendications précédentes,
**caractérisé en ce que**
la section de découplage de lumière (200, 200A, 200B) s'étend le long d'un plan horizontal.

9. Système optique (10) comprenant au moins deux éléments optiques (1, 1A, 1B) selon l'une quelconque des revendications précédentes,
**caractérisé en ce que**
au moins une partie, en particulier une pluralité, des sections de guidage de lumière (2A) d'un premier élément optique (1A) sont disposées horizontalement entre des sections de guidage de lumière (2B) d'un deuxième élément optique (1B) et se chevauchent verticalement avec ces sections de guidage de lumière (2B) du deuxième élément optique (1B), dans lequel, en particulier, une normale de surface de la section de découplage de lumière (200A) du premier élément optique (1A) et une normale de surface de la section de découplage de lumière (200B) du deuxième élément optique (1B) pointent dans la même direction ou dans des directions mutuellement opposées, dans lequel, en particulier, la normale de surface de la section de découplage de lumière (200A) du premier élément optique (1A) pointe verticalement vers le haut et la normale de surface de la section de découplage de lumière (200B) du deuxième élément optique (1B) pointe verticalement vers le bas.

10. Système optique (10) selon la revendication 9,
**caractérisé en ce que**
des DEL d'une première couleur de lumière sont disposées dans la section de couplage de lumière (100A) du premier élément optique (1A) et des DEL d'une deuxième couleur de lumière sont disposées dans la section de couplage de lumière (100B) du deuxième élément optique (1B), la première couleur de lumière étant différente de la deuxième couleur de lumière, dans lequel, en particulier, précisément une ou précisément un groupe de DEL de la première couleur de lumière est attribué respectivement à chacune des au moins quelques sections de guidage de lumière (2A) ou respectivement à un groupe de sections de guidage de lumière (2A) du premier élément optique (1A) et précisément une ou précisément un groupe de DEL de la deuxième couleur de lumière est attribué respectivement à chacune des au moins quelques sections de guidage de lumière (2B) ou respectivement à un groupe de sections de guidage de lumière (2B) du deuxième élément optique (1B).

11. Système optique selon l'une quelconque des revendications 9 ou 10,
**caractérisé en ce que**
le premier élément optique (1A) est associé à une première courbe de répartition de la lumière et le deuxième élément optique (1B) est associé à une deuxième courbe de répartition de la lumière, les deux courbes de répartition de la lumière étant différentes l'une de l'autre.

12. Luminaire comprenant un élément optique (1, 1A, 1B) selon l'une quelconque des revendications 1 à 9 et en particulier un système optique (10) selon l'une quelconque des revendications 9 à 11, dans lequel le luminaire comprend une source lumineuse, qui comprend en particulier une ou plusieurs LED, ainsi qu'une unité de commande pour commander la source lumineuse, dans lequel en particulier dans une majorité des sections de guidage de lumière (2, 2A, 2B) précisément une unité LED disposée sur la section de couplage de lumière (100, 100A, 100B) est affectée à chacune des sections de guidage de lumière (2, 2A, 2B) ou à chaque groupe de sections de guidage de lumière (2A, 2B), l'unité de commande étant configurée en particulier pour commander un premier groupe d'unités LED indépendamment d'un second groupe d'unités LED.

13. Luminaire selon la revendication 12, comprenant un système optique (10) selon la revendication 11,
**caractérisé en ce que**
les normales de surface des sections de découplage de lumière (200A, 200B) des deux éléments optiques (1A, 1B) du système optique (10) pointent dans la même direction et qu'à la section de couplage de lumière (100A) du premier élément optique est disposé un premier des groupes d'unités LED et à la section de couplage de lumière (100B) du second élément optique (100B) est disposé un second des groupes d'unités LED, l'unité de commande étant configurée pour commander les deux groupes indépendamment l'un de l'autre afin d'assurer la sélection d'une distribution lumineuse rayonnée par le système optique (10) lors de l'utilisation du luminaire.

14. Luminaire selon l'une quelconque des revendications 12 ou 13,
**caractérisé en ce que**
les unités LED du premier groupe d'unités LED sont chacune disposées sur des sections de guidage de lumière (2, 2A, 2B) qui fournissent une première répartition de la lumière et **en ce que** les unités LED du deuxième groupe d'unités LED sont chacune disposées sur des sections de guidage de lumière (2, 2A, 2B) qui fournissent une deuxième répartition de la lumière
et/ou **en ce que**
le premier groupe d'unités LED comprend exclusivement des LED ayant une première couleur de lumière et le deuxième groupe d'unités LED comprend exclusivement des LED ayant une deuxième couleur de lumière différente de la première couleur de lumière ou que les unités LED comprennent respectivement des LED ayant une première couleur de lumière et des LED ayant une deuxième couleur de lumière, les LED ayant une première couleur de lumière, qui appartiennent à un groupe particulier d'unités LED, pouvant être commandées par l'unité de commande indépendamment des LED ayant une deuxième couleur de lumière qui appartiennent à ce groupe particulier.
